(19) Europäisches Patentamt / European Patent Office / Office européen des brevets

(11) **EP 3 899 448 B1**

(12) **EUROPÄISCHE PATENTSCHRIFT**

(45) Veröffentlichungstag und Bekanntmachung des Hinweises auf die Patenterteilung:
**27.03.2024   Patentblatt 2024/13**

(21) Anmeldenummer: **19806229.1**

(22) Anmeldetag: **21.11.2019**

(51) Internationale Patentklassifikation (IPC):
**G01F 1/84** *(2006.01)*    **G01F 25/10** *(2022.01)*
**G01F 15/02** *(2006.01)*    **G01F 15/00** *(2006.01)*

(52) Gemeinsame Patentklassifikation (CPC):
**G01F 1/8427; G01F 1/8431; G01F 1/8436;**
**G01F 1/8495; G01F 15/024; G01F 25/10;**
G01F 15/007

(86) Internationale Anmeldenummer:
**PCT/EP2019/082048**

(87) Internationale Veröffentlichungsnummer:
**WO 2020/126286 (25.06.2020 Gazette 2020/26)**

(54) **CORIOLIS-MASSENDURCHFLUSS-MESSER MIT MAGNETFELDDETEKTOR**

CORIOLIS MASS FLOWMETER WITH MAGNETIC FIELD DETECTOR

DÉBITMÈTRE MASSIQUE À EFFET CORIOLIS MUNI D'UN DÉTECTEUR DE CHAMP MAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2018   DE 102018133475**
**11.01.2019   DE 102019100641**

(43) Veröffentlichungstag der Anmeldung:
**27.10.2021   Patentblatt 2021/43**

(73) Patentinhaber: **Endress + Hauser Flowtec AG**
**4153 Reinach (CH)**

(72) Erfinder:
• **LALLA, Robert**
**79541 Lörrach (DE)**
• **RIEDER, Alfred**
**84032 Landshut (DE)**
• **BITTO, Ennio**
**4147 Aesch (CH)**
• **BRAUN, Marcel**
**79594 Inzlingen (DE)**

(74) Vertreter: **Hahn, Christian et al**
**Endress+Hauser Group Services**
**(Deutschland)AG +Co. KG**
**Colmarer Straße 6**
**79576 Weil am Rhein (DE)**

(56) Entgegenhaltungen:
EP-A1- 0 644 403         WO-A1-88/03642
WO-A1-2020/126282    DE-A1-102019 133 328
US-A- 5 400 653          US-A- 6 138 517

**Beschreibung**

Die Erfindung betrifft ein Coriolis-Massendurchfluß-Meßgerät zum Messen eines Massenstroms eines fluiden Meßstoff.

In der industriellen Meßtechnik werden - insb. auch im Zusammenhang mit der Regelung und Überwachung von automatisierten verfahrenstechnischen Prozessen - zur hochgenauen Ermittlung einer oder mehrerer Meßgrößen, beispielsweise eines Massenstroms und/oder einer Dichte, eines in einer Prozeßleitung, beispielsweise einer Rohrleitung, strömenden Meßstoffs, beispielsweise einer Flüssigkeiten, eines Gases oder einer Dispersion, oftmals jeweils mittels einer - zumeist mittels wenigstens eines Mikroprozessors gebildeten - Umformerschaltung sowie einem mit nämlicher Umformerschaltung elektrisch verbundenen, im Betrieb vom zu messenden Meßstoff durchströmten Meßwandler vom Vibrationstyp gebildete Coriolis-Massendurchfluß-Meßgeräte verwendet.

Beispiele für solche, beispielsweise auch als Dichte- und/oder Viskositäts-Meßgeräte, ausgebildeten Coriolis-Massendurchfluß-Meßgeräte sind u.a. in der EP-A 564 682, der EP-A 816 807, der EP-A 644 403, der US-A 2002/0033043, der US-A 2006/0096390, der US-A 2007/0062309, der US-A 2007/0119264, der US-A 2008/0011101, der US-A 2008/0047362, der US-A 2008/0190195, der US-A 2008/0250871, der US-A 2010/0005887, der US-A 2010/0011882, der US-A 2010/0257943, der US-A 2011/0161017, der US-A 2011/0178738, der US-A 2011/0219872, der US-A 2011/0265580, der US-A 2011/0271756, der US-A 2012/0123705, der US-A 2013/0042700, der US-A 2016/0071639, der US-A 2016/0313162, der US-A 2016/0187176, der US-A 2017/0003156, der US-A 2017/0261474, der US-A 44 91 009, der US-A 47 56 198, der US-A 47 77 833, der US-A 48 01 897, der US-A 48 76 898, der US-A 49 96 871, der US-A 50 09 109, der US-A 52 87 754, der US-A 52 91 792, der US-A 53 49 872, der US-A 57 05 754, der US-A 57 96 010, der US-A 57 96 011, der US-A 58 04 742, der US-A 58 31 178, der US-A 59 45 609, der US-A 59 65 824, der US-A 60 06 609, der US-A 60 92 429, der US-B 62 23 605, der US-B 63 11 136, der US-B 64 77 901, der US-B 65 05 518, der US-B 65 13 393, der US-B 66 51 513, der US-B 66 66 098, der US-B 67 11 958, der US-B 68 40 109, der US-B 68 83 387, der US-B 69 20 798, der US-B 70 17 424, der US-B 70 40 181, der US-B 70 77 014, der US-B 71 43 655, der US-B 72 00 503, der US-B 72 16 549, der US-B 72 96 484, der US-B 73 25 462, der US-B 73 60 451, der US-B 76 65 369, der US-B 77 92 646, der US-B 79 54 388, der US-B 82 01 460, der US-B 83 33 120, der US-B 86 95 436, der WO-A 00/19175, der WO-A 00/34748, der WO-A 01/02812, der WO-A 01/02816, der WO-A 01/71291, der WO-A 02/060805, der WO-A 2005/050145, der WO-A 2005/093381, der WO-A 2007/043996, der WO-A 2008/013545, der WO-A 2008/059262, der WO-A 2009/148451, der WO-A 2010/099276, der WO-A 2013/092104, der WO-A 2014/151829, der WO-A 2016/058745, der WO-A 2017/069749, der WO-A 2017/123214, der WO-A 2017/137347, der WO-A 2017/143579, der WO-A 2018/160382,der WO-A 2018/174841, der WO-A 85/05677, der WO-A 88/02853, der WO-A 88/03642, der WO-A 89/00679, der WO-A 94/21999, der WO-A 95/03528, der WO-A 95/16897, der WO-A 95/29385, der WO-A 95/29386, der WO-A 98/02725, der WO-A 99/40 394, WO-A 2018/028932, der WO-A 2018/007176, der WO-A 2018/007185 oder der nicht vorveröffentlichten deutschen Patentanmeldung DE102018102831.8 beschrieben.

Der Meßwandler eines jeden der darin gezeigten Coriolis-Massendurchfluß-Meßgeräte umfaßt wenigstens ein Vibrationselement, das typischerweise als ein zumindest abschnittsweise gerades und/oder zumindest abschnittsweise gekrümmtes, z.B. U-, V-, S-, Z- oder Ω-artig geformtes, Meßrohr mit einem von einer Rohrwand umgebenen Lumen zum Führen des Meßstoffs ausgebildet ist, oder das - wie u.a. auch in der WO-A 2018/160382, der US-A 2016/0187176 oder der vorbezeichneten Patentanmeldung DE102018102831.8 gezeigt - beispielsweise auch als ein innerhalb eines Lumens eines vom Meßstoff durchströmten Rohrs plaziertes Verdrängerelement ausgebildet sein kann. Das wenigstens eine Vibrationselement ist dafür eingerichtet, vom Meßstoff kontaktiert, beispielsweise nämlich vom Meßstoff durchströmt und/oder umströmt, und währenddessen vibrieren gelassen zu werden, insb. derart, daß es Nutzschwingungen, nämlich mechanische Schwingungen um eine Ruhelage mit einer auch von der Dichte des Mediums mitbestimmten, mithin als Maß für die Dichte verwendbaren Nutzfrequenz ausführt. Bei herkömmlichen, nicht zuletzt Coriolis-Massendurchfluß-Meßgeräten mit als Meßrohr ausgebildetem Vibrationselement, dienen typischerweise Biegeschwingungen auf einer natürlichen Resonanzfrequenz als Nutzschwingungen, beispielsweise solche Biegeschwingungen, die einem dem Meßwandler immanenten natürlichen Biegeschwingungsgrundmode entsprechen, in dem die Schwingungen des Vibrationselements solche Resonanzschwingungen sind, die genau einen Schwingungsbauch aufweisen. Die Nutzschwingungen sind bei einem zumindest abschnittsweise gekrümmtem Meßrohr als Vibrationselement zudem typischerweise so ausgebildet, daß das nämliches Meßrohr um eine ein einlaßseitiges und ein außlaßseitiges Ende des Meßrohrs imaginär verbindenden gedachte Schwingungsachse nach Art eines an einem Ende eingespannten Auslegers pendelt, während hingegen bei Meßwandlern mit einem geraden Meßrohr als Vibrationselement die Nutzschwingungen zumeist Biegeschwingungen in einer einzigen gedachten Schwingungsebene sind.

Es ist zudem bekannt, das wenigstens eine Vibrationselement, beispielsweise zwecks Durchführung wiederkehrender Überprüfungen des Meßwandlers während des Betriebs des Meßgeräts, gelegentlich auch zu zeitlich andauernden erzwungenen Schwingungen außer Resonanz anzuregen oder gelegentlich auch freie gedämpfte Schwingungen des wenigstens einen Vibrationselements zu ermöglichen sowie nämliche Schwingungen jeweils auszuwerten, etwa um, wie u.a. auch in der vorgenannten EP-A 816 807, US-A 2011/0178738 oder US-A 2012/0123705 beschrieben, allfällige Beschädigungen des wenigstens einen Vibrationselements möglichst frühzeitig zu detektieren, die eine unerwünschte Verringerung der Meßgenauigkeit und/oder der Betriebssicherheit des jeweiligen Meßgeräts bewirken können.

Bei Meßwandlern mit zwei jeweils als Meßrohr ausgebildeten Vibrationselementen sind diese zumeist über ein sich zwischen den Meßrohren und einem einlaßseitigen Anschlußflansch erstreckenden einlaßseitig Verteilerstück sowie über ein sich zwischen den Meßrohren und einem auslaßseitigen Anschlußflansch erstreckenden auslaßseitig Verteilerstück in die jeweilige Prozeßleitung eingebunden. Bei Meßwandlern mit einem einzigen Meßrohr als Vibrationselement kommuniziert letzteres zumeist über ein einlaßseitig einmündendes Verbindungsrohr sowie über ein auslaßseitig einmündendes Verbindungsrohr mit der Prozeßleitung. Ferner umfassen Meßwandler mit einem einzigen Meßrohr als Vibrationselement jeweils wenigstens ein weiteres, nämlich als ein, beispielsweise rohr-, kasten- oder plattenförmigen, Gegenschwinger ausgebildetes, gleichwohl nicht vom Meßstoff kontaktiertes Vibrationselement, das unter Bildung einer ersten Kopplungszone einlaßseitig an das Meßrohr gekoppelt ist und der unter Bildung einer zweiten Kopplungszone auslaßseitig an das Meßrohr gekoppelt ist, und das im Betrieb im wesentlichen ruht oder entgegengesetzt zum Meßrohr oszilliert. Das dabei mittels Meßrohr und Gegenschwinger gebildete Innenteil des Meßwandlers ist zumeist allein mittels der zwei Verbindungsrohre, über die das Meßrohr im Betrieb mit der Prozeßleitung kommuniziert, in einem schutzgebenden Aufnehmer-Gehäuse gehaltert, insb. in einer Schwingungen des Innenteils relativ zum Aufnehmer-Gehäuse ermöglichenden Weise. Bei den beispielsweise in der US-A 52 91 792, der US-A 57 96 010, der US-A 59 45 609, der US-B 70 77 014, der US-A 2007/0119264, der WO-A 01/02 816 oder auch der WO-A 99/40 394 gezeigten Meßwandlern mit einem einzigen, im wesentlichen geraden Meßrohr sind letzteres und der Gegenschwinger, wie bei herkömmlichen Meßwandlern durchaus üblich, zueinander im wesentlichen koaxial ausgerichtet, indem der Gegenschwinger als im wesentlichen gerader Hohlzylinder ausgebildet und im Meßwandler so angeordnet ist, daß das Meßrohr zumindest teilweise vom Gegenschwinger ummantelt ist. Als Materialien für solche Gegenschwinger kommen, insb. auch bei Verwendung von Titan, Tantal oder Zirkonium für das Meßrohr, zumeist vergleichsweise kostengünstige Stahlsorten, wie etwa Baustahl oder Automatenstahl, zum Einsatz.

Zum aktiven Anregen bzw. Aufrechterhalten von Schwingungen des wenigstens einen Vibrationselements, nicht zuletzt auch den vorbezeichneten Nutzschwingungen, weisen Meßwandler vom Vibrationstyp des weiteren wenigstens einen im Betrieb auf das wenigstens eine Vibrationselement einwirkenden elektromechanischen, typischerweise ebenfalls elektrodynamischen Schwingungserreger auf. Der mittels eines Paars elektrischer Anschlußleitungen, beispielsweise in Form von Anschlußdrähten und/oder inform von Leiterbahnen einer flexiblen Leiterplatte, mit der vorbezeichneten Umformerschaltung elektrisch verbundene Schwingungserreger dient im besonderen dazu, angesteuert von einem in der Umformerschaltung vorgesehenen Antriebselektronik generierten und entsprechend konditionierten, nämlich zumindest an sich verändernde Schwingungseigenschaften des wenigstens einen Vibrationselemnts angepaßten elektrischen Treibersignal eine mittels nämlichen Treibersignals eingespeiste elektrische Erregerleistung in eine an einem vom Schwingungserreger gebildeten Angriffspunkt auf das wenigstens eine Vibrationselment wirkende Antriebskraft zu wandeln. Die Antriebselektronik ist im besonderen auch dafür eingerichtet, das Treibersignal mittels interner Regelung so einzustellen, daß es eine der anzuregenden, gelegentlich auch zeitlich ändernden Nutzfrequenz entsprechende Signalfrequenz aufweist, ggf. als bei einer durch einen Erregerstrom, nämlich einen elektrischen Strom des Treibersignals vorgegebenen Schwingungsamplitude. Das Treibersignal kann beispielsweise im Betrieb des Meßgeräts gelegentlich auch abgeschaltet werden, beispielsweise zwecks Ermöglichen der vorbezeichneten freien gedämpften Schwingungen des wenigstens einen Vibrationselements oder beispielsweise, wie in der eingangs erwähnten WO-A 2017143579 vorgeschlagen, um die Antriebselektronik vor einer Überlastung zu schützen.

Schwingungserreger marktgängiger Meßwandler vom Vibrationstyp sind typischerweise nach Art einer nach dem elektrodynamischen Prinzip arbeitenden Schwingspule, nämlich einer Luftspule-Magnet-Anordnung aufgebaut, die mittels einer - bei Meßwandlern mit einem Meßrohr und einem daran gekoppelten Gegenschwinger gebildeten Vibrationselementen zumeist an letzterem fixierten - Luftspule, nämlich einer keinen magnetischen Kern, sondern vielmehr Luft einschließenden Spule sowie einen mit der wenigstens einen Luftspule wechselwirkenden als Anker dienenden - beispielsweise entsprechend an vorbezeichnetem Meßrohr fixierten - Permanentmagneten gebildet ist und bei der die jeweilige Luftspule zumindest teilweise in einem einen Magnetischer Fluß führenden Luftspalt des Permanentmagneten positioniert ist. Permanentmagneten und Luftspule sind dabei üblicherweise so ausgerichtet, daß sie zueinander im wesentlichen koaxial verlaufen, und zudem dafür eingerichtet, relativ zueinander bzw. gegengleich bewegt zu werden, derart, daß bei durch die Luftspule fließendem Erregerstrom der Permanentmagnet und die in dessen Luftspalt befindliche Luftspule im wesentlichen translatorisch hin- und her bewegt werden. Zudem ist bei herkömmlichen Meßwandlern der Schwingungserreger zumeist so ausgebildet und plaziert, daß er im wesentlichen mittig an das wenigstens eine Meßrohr angreift. Alternativ zu einem eher zentral und direkt auf das wenigstens eine Vibrationselement wirkenden Schwingungserreger können, wie u.a. in der eingangs erwähnten US-A 60 92 429, beispielsweise auch mittels zweier nicht im Zentrum des wenigstens einen Vibrationselement, sondern eher ein- bzw. auslaßseitig an diesem fixierten Schwingungserreger zum aktiven Anregung mechanischer Schwingungen des wenigstens einen Vibrationselements verwendet werden oder, wie u.a. in der US-B 62 23 605 oder der US-A 55 31 126 vorgeschlagen, beispielsweise auch mittels eines zwischen dem wenigstens einen Vibrationselement und dem Aufnehmer-Gehäuse wirkenden Schwingungserreger gebildete Erregeranordnungen verwendet werden.

Aufgrund der Nutzschwingungen des wenigstens einen Vibrationselements, werden - nicht zuletzt auch für den Fall, daß die Nutzschwingungen des wenigstens einen Vibrationselements quer zur Strömungsrichtung auf den strömenden Meßstoff wirkende Biegeschwingungen sind - im Meßstoff bekanntlich auch vom momentanen Massenstrom abhängige Corioliskräfte induziert. Diese wiederum können vom Massenstrom abhängige, sich den Nutzschwingungen überlagernde Coriolisschwingungen des Vibrationselements, ebenfalls mit Nutzfrequenz, bewirken, derart, daß zwischen einlaßseitigen und auslaßseitigen Schwingungsbewegungen des die Nutzschwingungen ausführenden und zugleich vom Medium durchströmten wenigstens einen Meßrohrs eine auch vom Massenstrom abhängige, mithin auch als Maß für die Massendurchflußmessung nutzbare Laufzeit- bzw. Phasendifferenz detektiert werden kann. Bei einem zumindest abschnittsweise gekrümmtem Meßrohr als Vibrationselement, bei dem für die Nutzschwingungen eine Schwingungsform, in der nämliches Meßrohr nach Art eines an einem Ende eingespannten Auslegers pendeln gelassen wird, gewählt ist, entsprechen die resultierenden Coriolisschwingungen beispielsweise jenem - gelegentlich auch als Twist-Mode bezeichneten - Biegeschwingungsmode, in dem das Meßrohr Drehschwingungen um eine senkrecht zur erwähnten gedachten Schwingungsachse ausgerichtete gedachte Drehschwingungsachse ausführt, wohingegen bei einem geraden Meßrohr als Vibrationselement, dessen Nutzschwingungen als Biegeschwingungen in einer einzigen gedachten Schwingungsebene ausgebildet sind, die Coriolisschwingungen beispielsweise als zu den Nutzschwingungen im wesentlichen koplanare Biegeschwingungen sind.

Zum Erfassen sowohl einlaßseitiger als auch auslaßseitiger Schwingungsbewegungen des wenigstens einen Vibrationselements, nicht zuletzt auch den den Nutzschwingungen entsprechenden, und zum Erzeugen wenigstens zweier von der zu messenden Massenstrom beeinflußten elektrischen Schwingungsmeßsignalen weisen Meßwandler der in Rede stehenden Art desweiteren zwei oder mehr entlang des wenigstens einen Vibrationselements voneinander beabstandete, beispielsweise jeweils mittels eines eigenen Paars elektrischer Anschlußleitungen mit eine in der vorbezeichneten Umformerschaltung elektrisch verbundenen, Schwingungssensoren auf. Jeder der Schwingungssensoren ist eingerichtet, die vorbezeichneten Schwingungsbewegungen an einem jeweiligen Meßpunkt zu erfassen und jeweils in ein nämliche Schwingungsbewegungen repräsentierendes elektrisches Schwingungsmeßsignal zu wandeln, das eine Nutzkomponente, nämlich eine (spektrale) Signal- bzw. nämlich eine Wechselspannungskomponente mit einer der Nutzfrequenz entsprechenden (Signal-)Frequenz und einer von der Nutzfrequenz und einem im jeweiligen Schwingungssensor etablierten magnetischer Fluß abhängigen (Signal-)Ampitude enthält, und nämliches Schwingungsmeßsignal jeweils der Umformerschaltung, beispielsweise nämlich einer mittels wenigstens eines Mikroprozessors gebildeten Meß- und Steuer-Elektronik der Umformerschaltung, zur weiteren, ggf. auch digitalen Verarbeitung zur Verfügung zu stellen. Zudem sind die wenigstens zwei Schwingungssensoren so ausgestaltet und angeordnet, daß die vorbezeichnete Nutzkomponente der damit generierten Schwingungsmeßsignale zudem jeweils einen vom Massenstrom abhängigen Phasenwinkel aufweisen, derart zwischen den Nutzkomponenten beider Schwingungsmeßsignale eine vom Massenstrom abhängige Laufzeit- bzw. Phasendifferenz meßbar ist. Basierend auf nämlicher Phasendifferenz ermittelt die Umformerschaltung bzw. deren Meß- und Steuer-Elektronik wiederkehrend den Massenstrom repräsentierende Massenstrom-Meßwerte. In Ergänzung zur Messung des Massenstroms kann - etwa basierend auf der Nutzfrequenz und/oder auf einer für die Anregung bzw. Aufrechterhaltung der Nutzschwingungen erforderlichen elektrischen Erregerleistung bzw. einer anhand dessen ermittelten Dämpfung der Nutzschwingungen - zusätzlich auch die Dichte und/oder die Viskosität des Mediums gemessen und von der Umformerschaltung zusammen mit dem gemessenen Massenstrom in Form qualifizierter Meßwerte ausgegeben werden. Typischerweise sind die beiden Schwingungssensoren als elektrodynamische Schwingungssensoren ausgebildet, insb. nämlich gleichermaßen wie der wenigstens eine Schwingungserreger jeweils mittels einer - hier als Tauchspule dienlichen - Luftspule-Magnet-Anordnung gebildet, bei der ebenfalls jeweils eine Luftspule zumindest teilweise in einem einen magnetischer Fluß führenden Luftspalt eines zugehörigen Permanentmagneten positioniert ("eingetaucht") ist und bei der zudem Luftspule und Permanentmagnet eingerichtet sind, zwecks Generierens einer Induktionsspannung relativ zueinander bewegt zu werden, derart, daß die Luftspule im Luftspalt im wesentlichen translatorisch hin- und her bewegt wird. Der Permanentmagnet und die Luftspule sind dabei üblicherweise so ausgerichtet, daß sie zueinander im wesentlichen koaxial verlaufen.

Es ist bekannt, daß bei Verwendung von elektrodynamischen Schwingungssensoren die vorbezeichneten Phasenwinkel der Nutzkomponenten jedes der Schwingungsmeßsignale trotz gleichbleibendem Massenstroms zeitlich ändern können bzw. daß die zwischen den Nutzkomponenten etablierte Phasendifferenz gelegentlich eine nicht vom Massenstrom abhängige Störkomponente aufweisen kann, derart, ein signifikanter Phasenfehler, nämlich eine nicht mehr vernachlässigbare zusätzliche Änderung der Phasendifferenz zu beobachten ist. Weiterführende Untersuchungen an konventionellen Coriolis-Massendurchfluß-Meßgeräten haben gezeigt, daß solche Phasenfehler im besonderen für auch den Fall auftreten können, daß das jeweilige Coriolis-Massendurchfluß-Meßgerät in der Nähe eines oder mehreren Elektromotoren, Transformatoren, (Elektro-)Magneten, Wechselrichtern oder anderweitigen hohe elektrische Ströme, insb. auch Gleichströme, führenden Anlagenteilen stationiert, mithin einem gelegentlich auch sehr starken externen, nämlich von außerhalb des Coriolis-Massendurchfluß-Meßgeräts verursachten, gleichwohl sich auch innerhalb des Coriolis-Massendurchfluß-Meßgeräts ausbreitendes zusätzlichen Magnetfeld ausgesetzt ist.

Wie u.a. auch in der eingangs erwähnten WO-A 01/02812 oder US-B 76 65 369 erörtert, besteht eine Möglichkeit zur Reduzierung des vorbezeichneten, auf externe Magnetfelder zurückzuführenden Phasenfehlers beispielsweise darin, das Aufnehmer-Gehäuse durch die Verwendung von Materialien mit einer vergleichsweise hohen relativen magnetischen Leitfähigkeit, beispielsweise Automatenstahl oder Baustahl, so auszubilden, daß dessen effektiver magnetischer Widerstand signifikant verringert wird. Eine weitere Möglichkeit zur Vermeidung von durch externe Magnetfelder bedingten Meßfehlern bestünde, wie in der US-B 76 65 369 ebenfalls vorgeschlagen, auch darin, in den jeweiligen Magnetbechern der Schwingungssensoren die durch externe Magnetfelder hervorgerufenen Wirbelströme unterdrückende Schlitze vorzusehen. Untersuchungen haben allerdings gezeigt, daß die vorbezeichneten Maßnahmen zwar durchaus die in das Aufnehmer-Gehäuse eindringenden Magnetfelder schwächen und dadurch auch eine Beitrag zur Reduzierungen der vorbezeichneten Störkomponente leisten können, daß aber selbst durch eine Vereinigung beider Maßnahmen der Phasenfehler mit vertretbarem technischen Aufwand nicht immer unterhalb eines noch tolerierbaren Ausmaßes verringert werden kann. Im Ergebnis kann bei einem herkömmlichen Coriolis-Massendurchfluß-Meßgerät dementsprechend nicht ohne weiteres ausgeschlossen werden, daß der Massenstrom aufgrund eines unbekannten externen, ggf. auch lediglich vorübergehend etablierten und/oder schwankenden, Magnetfeldes unerkannt mit deutlich erhöhten Meßfehlern gemessen wird bzw. entsprechende Massenstrom-Meßwerte mit signifikant verringerter Meßgenauigkeit ausgegeben werden.

Ausgehend vom vorbezeichneten Stand der Technik besteht eine Aufgabe der Erfindung darin, Coriolis-Massendurchfluß-Meßgeräte dahingehend zu verbessern, daß damit auch die Anwesenheit eines exteren Magnetfelds bzw. dessen Einfluß auf die Meßgenauigkeit zumindest detektiert, beispielsweise auch zeitnah entsprechend vermeldet werden kann.

Zur Lösung der Aufgabe besteht die Erfindung in einem Coriolis-Massendurchfluß-Meßgerät, beispielsweise nämlich einem Coriolis-Massendurchfluß-/Dichte-Meßgerät, zum Messen eines Massenstroms eines fluiden Meßstoffs - beispielsweise eines Gases, einer Flüssigkeit oder einer Dispersion -, welches Coriolis-Massendurchfluß-Meßgerät einen Meßwandler, der wenigstens ein Vibrationselement, eine Erregeranordnung sowie eine Sensoranordnung aufweist und der eingerichtet ist, den Meßstoff zu führen, nämlich zumindest zeitweise vom Meßstoff durchströmt zu werden, sowie eine mit dem Meßwandler, nämlich sowohl mit dessen Erregeranordnung als auch dessen Sensoranordnung elektrisch gekoppelte, beispielsweise mittels wenigstens eines Mikroprozessors gebildete, elektronische Umformerschaltung umfaßt. Das wenigstens eine Vibrationselement ist eingerichtet, vom strömenden Meßstoff kontaktiert und währenddessen vibrieren gelassen zu werden und die Erregeranordnung ist eingerichtet, dorthin eingespeiste elektrische Leistung in erzwungene mechanische Schwingungen des Vibrationselements bewirkende mechanische Leistung zu wandeln. Die Umformerschaltung wiederum ist eingerichtet, ein elektrisches Treibersignal zu generieren und damit elektrische Leistung in die Erregeranordnung einzuspeisen, derart, daß das Vibrationselement zumindest anteilig Nutzschwingungen, nämlich erzwungene mechanische Schwingungen mit wenigstens einer Nutzfrequenz, nämlich einer durch das elektrische Treibersignal vorgegebenen, beispielsweise einer Resonanzfrequenz des Meßwandlers entsprechenden, Schwingungsfrequenz ausführt, die geeignet sind, im strömendem Meßstoff vom Massenstrom abhängige Corioliskräfte zu bewirken. Zum Erfassen mechanischer Schwingungen des wenigstens einen Vibrationselements, beispielsweise nämlich dessen Nutzschwingungen, weist die Sensoranordnung einen elektrodynamischen ersten Schwingungssensor und wenigstens einen, beispielsweise zum ersten Schwingungssensor baugleichen, elektrodynamischen zweiten Schwingungssensor auf. Der erste Schwingungssensor ist eingerichtet, Schwingungsbewegungen des wenigstens einen Vibrationselements an einem ersten Meßpunkt in ein elektrisches erstes Schwingungsmeßsignal der Sensoranordnung zu wandeln, derart, daß nämliches erstes Schwingungsmeßsignal wenigstens eine erste Nutzkomponente, nämlich eine Wechselspannungskomponente mit einer der Nutzfrequenz entsprechenden Frequenz, und mit einer von der Nutzfrequenz und einem ersten magnetischen Fluß, nämlich einem magnetischen Fluß durch den ersten Schwingungssensor abhängigen Amplitude aufweist und der zweite Schwingungssensor ist eingerichtet, Schwingungsbewegungen des wenigstens einen Vibrationselements an einem vom ersten Meßpunkt entfernten zweiten Meßpunkt in ein elektrisches zweites Schwingungsmeßsignal der Sensoranordnung zu wandeln, derart, daß nämliches zweites Schwingungsmeßsignal wenigstens eine zweite Nutzkomponente, nämlich eine Wechselspannungskomponente mit einer der Nutzfrequenz entsprechenden Frequenz,und mit einer von der Nutzfrequenz und einem zweiten magnetischen Fluß, nämlich einem magnetischen Fluß durch den zweiten Schwingungssensor abhängigen Amplitude aufweist. Zum Erfassen auch eines zumindest anteilig auch außerhalb der ersten und zweiten Schwingungssensoren etablierten Magnetfeldes weist die Sensoranordnung wenigstens einen, beispielsweise mittels eines Hall-Sensors und/oder eines Reedschalters gebildeten, ersten Magnetfelddetektor auf, der eingerichtet ist, Änderungen nämlichen Magnetfeldes an einem sowohl vom ersten Meßpunkt als auch vom zweiten Meßpunkt entfernten dritten Meßpunkt in ein, beispielsweise nämliche Änderungen bewertendes und/oder nämliche Änderungen quantifizierendendes und/oder elektrisches, erstes Magnetfeldsignal der Sensoranordnung zu wandeln, das eine von einem dritten magnetischen Fluß, nämlich einem magnetischen Fluß durch den ersten Magnetfelddetektor und/oder von einer Flächendichte nämlichen magnetischen Flusses abhängige Amplitude aufweist, derart, daß das erste Magnetfeldsignal auf zumindest eine Änderung des dritten magnetischen Flusses und/oder dessen Flächendichte mit einer Änderung der Amplitude folgt. Darüberhinaus ist die Umformerschaltung zudem auch dafür eingerichtet, sowohl die ersten und zweiten Schwingungsmeßsignale als auch das erste Magnetfeldsignal zu empfangen und auszuwerten, nämlich anhand der ersten und zweiten Schwingungsmeßsignale den Massenstrom repräsentierende, beispielsweis auch digitale, Massenstrom-Meßwerte zu ermitteln sowie anhand des ersten Magnetfeldsignals zumindest qualitativ zu ermitteln, ob innerhalb des Meßwandlers ein externes, beispielsweise nämlich durch ein außerhalb des Coriolis-Massendurchfluß-Meßgeräts erzeugtes elektrisches Feld und/oder durch einen außerhalb des Coriolis-Massendurchfluß-Meßgeräts positionierten Magneten verursachtes, Magnetfeld etabliert ist, beispielsweise nämlich zu ermitteln, ob eine, insb. eine Funktionstüchtigkeit der Sensoranordnung vermindernde und/oder eine Fehlfunktion der Sensoranordnung bewirkende und/oder eine Integrität zumindest eines der ersten und zweiten Schwingungsmeßsignale bzw. der Massenstrom-Meßwerte herabsetzende, Störung des Meßwandlers durch nämliches externes Magnetfeld vorliegt.

Nach einer ersten Ausgestaltung der Erfindung ist ferner vorgesehen, daß der erste Magnetfeldetektor am ersten Schwingungssensor angebracht oder in dessen Nähe, beispielsweise nämlich weniger als 5 cm entfernt, positioniert ist.

Nach einer zweiten Ausgestaltung der Erfindung ist ferner vorgesehen, daß der erste Magnetfelddetektor am wenigstens einen Vibrationselement fixiert ist.

Nach einer dritten Ausgestaltung der Erfindung ist ferner vorgesehen, daß die Erregeranordnung zum Anregen von Schwingungen des wenigstens eine Meßrohrs einen, beispielsweise elektrodynamischen und/oder einzigen, Schwingungserreger aufweist.

Nach einer vierten Ausgestaltung der Erfindung ist ferner vorgesehen, daß das wenigstens eine Vibrationselement mittels wenigstens eines, beispielsweise zumindest abschnittsweise geraden und/oder zumindest abschnittsweise kreisbogenförmigen, Rohrs mit einem von einer, beispielsweise metallischen, Rohrwand und einem davon umhüllten Lumen gebildet und dafür eingerichtet ist, von Meßstoff durchströmt und währenddessen vibrieren gelassen zu werden.

Nach einer fünften Ausgestaltung der Erfindung ist ferner vorgesehen, daß der erste Schwingungssensor mittels einer ersten Tauchspule und der zweite Schwingungssensor mittels einer zweiten Tauchspule gebildet ist.

Nach einer sechsten Ausgestaltung der Erfindung ist ferner vorgesehen, daß die Umformerschaltung einen nicht-flüchtigen elektronischen Datenspeicher aufweist, der dafür eingerichtet ist, digitale Daten, beispielsweise auch ohne eine angelegte Betriebsspannung, vorzuhalten.

Nach einer siebenten Ausgestaltung der Erfindung ist ferner vorgesehen, daß das erste Magnetfeldsignal ein, beispielsweise werte- und zeitkontinuierliches, Analogsignal ist, beispielsweise mit einer vom dritten magnetischen Fluß und/oder von dessen Flächendichte abhängigen Spannung. Diese Ausgestaltung der Erfindung weiterbildend ist die Umformerschaltung ferner eingerichtet, anhand des ersten Magnetfeldsignals Kennzahlenwerte für wenigstens eine, beispielsweise eine Beeinflussung der Sensoranordnung durch das externe Magnetfeld und/oder eine Beeinflussung zumindest eines der ersten und zweiten magnetischen Flüsse charakterisierende, Magnetfeld-Kennzahl zu berechnen, beispielsweise derart, daß nämliche Magnetfeld-Kennzahl von einer Abweichung des ersten magnetischen Flusses vom zweiten magnetischen Fluß abhängig ist und/oder nämliche Abweichung bewertet und/oder quantifiziert oder daß nämliche Magnetfeld-Kennzahl von einer Abweichung des ersten magnetischen Flusses von einem vorab ermittelten Bezugswert abhängig ist und/oder nämliche Abweichung bewertet und/oder quantifiziert. Beispielsweise kann die Umformerschaltung auch dafür eingerichtet sein, einen oder mehrere Kennzahlenwerte für die Magnetfeld-Kennzahl jeweils mit einem oder mehreren für die Magnetfeld-Kennzahl, beispielsweise vom Hersteller des Coriolis-Massendurchfluß-Meßgeräts und/oder bei der Herstellung des Coriolis-Massendurchfluß-Meßgerät, ermittelten Bezugswerten, beispielsweise einem oder mehreren eine verminderte Funktionstüchtigkeit der Sensoranordnung repräsentierenden Bezugswerten und/oder einem oder mehreren eine Fehlfunktion der Sensoranordnung repräsentierenden Bezugswerten und/oder einem oder mehreren ein nicht mehr intaktes Coriolis-Massendurchfluß-Meßgerät repräsentierenden Bezugswerten, zu vergleichen bzw. zu ermitteln, ob eine oder mehrere Kennzahlenwerte für die Magnetfeld-Kennzahl größer als der wenigstens eine Bezugswert für die Magnetfeld-Kennzahl ist, beispielsweise nämlich falls ein oder mehrere Kennzahlenwerte für die Magnetfeld-Kennzahl größer als ein oder mehrere eine verminderte Funktionstüchtigkeit der Sensoranordnung repräsentierende Bezugswerte und/oder größer als ein oder mehrere eine Fehlfunktion der Sensoranordnung repräsentierende Bezugswerte ist und/oder größer als ein oder mehrere ein nicht mehr intaktes Coriolis-Massendurchfluß-Meßgerät repräsentierenden Bezugswerten ist, eine dies signalisierende Meldung auszugeben.

Nach einer achten Ausgestaltung der Erfindung ist ferner vorgesehen, daß die Umformerschaltung einen nicht-flüchtigen elektronischen Datenspeicher aufweist, der dafür eingerichtet ist, digitale Daten, beispielsweise auch ohne eine angelegte Betriebsspannung, vorzuhalten, beispielsweise nämlich einen oder mehrere vorab ermittelte Bezugswerte für die Magnetfeld-Kennzahl zu speichern, und daß das erste Magnetfeldsignal ein, beispielsweise werte- und zeitkontinuierliches, Analogsignal ist, beispielsweise mit einer vom dritten magnetischen Fluß und/oder von dessen Flächendichte abhängigen Spannung. Diese Ausgestaltung der Erfindung weiterbildend ist die Umformerschaltung ferner eingerichtet, anhand des ersten Magnetfeldsignals Kennzahlenwerte für wenigstens eine, beispielsweise eine Beeinflussung der Sensoranordnung durch das externe Magnetfeld und/oder eine Beeinflussung zumindest eines der ersten und zweiten magnetischen Flüsse charakterisierende, Magnetfeld-Kennzahl zu berechnen, beispielsweise derart, daß nämliche Magnetfeld-Kennzahl von einer Abweichung des ersten magnetischen Flusses vom zweiten magnetischen Fluß abhängig ist und/oder nämliche Abweichung bewertet und/oder quantifiziert oder daß nämliche Magnetfeld-Kennzahl von einer Abweichung des ersten magnetischen Flusses von einem vorab ermittelten Bezugswert abhängig ist und/oder nämliche Abweichung bewertet und/oder quantifiziert, und ist zudem vorgesehen, daß im elektronischen Datenspeicher ein oder mehrere, beispielsweise vom Hersteller des Coriolis-Massendurchfluß-Meßgeräts und/oder bei der Herstellung des Coriolis-Massendurchfluß-Meßgeräts und/oder im Betrieb des Coriolis-Massendurchfluß-Meßgeräts vorab ermittelte, Bezugswerte für die Magnetfeld-Kennzahl, beispielsweise nämlich ein oder mehrere eine verminderte Funktionstüchtigkeit der Sensoranordnung repräsentierende Bezugswerte und/oder nämlich ein oder mehrere eine Fehlfunktion der Sensoranordnung repräsentierende Bezugswerte, gespeichert sind. Zudem kann die Umformerschaltung ferner eingerichtet sein, einen oder mehrere Kennzahlenwerte für die Magnetfeld-Kennzahl jeweils mit einem oder mehreren im Datenspeicher gespeicherten Bezugswerten für die Magnetfeld-Kennzahl zu vergleichen.

Nach einer neunten Ausgestaltung der Erfindung ist ferner vorgesehen, daß der erste Schwingungssensor einen, beispielsweise unter Bildung des ersten Meßpunkts mechanisch mit dem wenigstens einen Vibrationselement verbundenen, ersten Permanentmagneten sowie eine erste Luftspule aufweist und daß der zweite Schwingungssensor einen, beispielsweise unter Bildung des zweiten Meßpunkts mechanisch mit dem wenigstens einen Vibrationselement verbundenen, zweiten Permanentmagneten sowie eine zweite Luftspule aufweist, derart, daß der erste Permanentmagnet einen den ersten magnetischen Fluß führenden ersten Luftspalt bildet und die erste Luftspule zumindest teilweise innerhalb nämlichen ersten Luftspalts positioniert ist, und daß der erste Permanentmagnet und die erste Luftspule eingerichtet sind, durch Schwingungsbewegungen des wenigstens einen Vibrationselements relativ zueinander bewegt zu werden und eine als erstes Schwingungsmeßsignal dienliche erste Induktionsspannung zu generieren, und derart, daß der zweite Permanentmagnet einen den zweiten magnetischen Fluß führenden zweiten Luftspalt bildet und die zweite Luftspule zumindest teilweise innerhalb nämlichen zweiten Luftspalts positioniert ist, und daß der zweite Permanentmagnet und die zweite Luftspule eingerichtet sind, durch Schwingungsbewegungen des wenigstens einen Vibrationselements relativ zueinander bewegt zu werden und eine als zweites Schwingungsmeßsignal dienliche zweite Induktionsspannung zu generieren.

Nach einer zehnten Ausgestaltung der Erfindung ist ferner vorgesehen, daß der erste Magnetfelddetektor mittels wenigstens einer am wenigstens einen Vibrationselement, beispielsweise am ersten Schwingungssensor, fixierten Luftspule gebildet ist.

Nach einer elften Ausgestaltung der Erfindung ist ferner vorgesehen, daß der erste Magnetfelddetektor mittels wenigstens eines Hall-Sensors gebildet ist.

Nach einer zwölften Ausgestaltung der Erfindung ist ferner vorgesehen, daß der erste Magnetfelddetektor mittels wenigstens eines Reedschalters gebildet ist.

Nach einer dreizehnten Ausgestaltung der Erfindung weist die Sensoranordnung zum Erfassen des Magnetfeldes ferner wenigstens einen, beispielsweise zum ersten Magnetfelddetektor baugleichen, zweiten Magnetfelddetektor auf, der eingerichtet ist, Änderungen des Magnetfeldes an einem vom dritten Meßpunkt entfernten, beispielsweise auch vom ersten Meßpunkt und/oder vom zweiten Meßpunkten entfernten, vierten Meßpunkt in ein, beispielsweise nämliche Änderungen bewertendes und/oder die Änderungen quantifizierendes und/oder elektrisches, zweites Magnetfeldsignal der Sensoranordnung zu wandeln, das eine von einem vierten magnetischen Fluß, nämlich einem magnetischen Fluß durch den zweiten Magnetfelddetektor und/oder von einer Flächendichte nämlichen magnetischen Flusses abhängige Amplitude aufweist, derart, daß das zweite Magnetfeldsignal auf zumindest eine Änderung des vierten magnetischen Flusses und/oder dessen Flächendichte mit einer Änderung der Amplitude folgt, und ist die Umformerschaltung ferner eingerichtet, auch das zweite Magnetfeldsignal zu empfangen und auszuwerten, nämlich anhand auch des zweiten Magnetfeldsignals zu ermitteln, ob das externe Magnetfeld vorliegt. Diese Ausgestaltung der Erfindung weiterbildend ist der zweite Magnetfelddetektor am zweiten Schwingungssensor angebracht oder in dessen Nähe, beispielsweise nämlich weniger als 5 cm entfernt, positioniert und/oder ist das zweite Magnetfeldsignal ein Analogsignal, beispielsweise mit einer vom vierten magnetischen Fluß und/oder von dessen Flächendichte abhängigen Spannung.

Nach einer vierzehnten Ausgestaltung der Erfindung ist ferner vorgesehen, daß die Meß- und Steuerelektronik einen ersten Analog-zu-Digital-Wandler für das erste Schwingungsmeßsignal sowie einen zweiten Analog-zu-Digital-Wandler für das zweite Schwingungsmeßsignal aufweist.

Nach einer fünfzehnten Ausgestaltung der Erfindung ist ferner vorgesehen, daß die Umformerschaltung eingerichtet ist, die Massenstrom Meßwerte mit einer Aktualisierungsrate zu ermitteln, die nicht kleiner, beispielsweise nämlich größer, ist als eine Aktualisierungsrate mit der die Umformerschaltung die Kennzahlenwerte für die Sensoren-Kennzahl ermittelt.

Nach einer sechzehnten Ausgestaltung der Erfindung ist ferner vorgesehen, daß jede der ersten und zweiten Nutzkomponenten jeweils einen vom Massenstrom abhängigen Phasenwinkel aufweist. Diese Ausgestaltung der Erfindung weiterbildend ist die Umformerschaltung ferner eingerichtet, die Massenstrom-Meßwerte anhand einer Phasendifferenz zwischen den ersten und zweiten Nutzkomponenten, nämlich einer Differenz zwischen dem Phasenwinkel der ersten Nutzkomponente und dem Phasenwinkel der zweiten Nutzkomponente zu berechnen.

Nach einer siebzehnten Ausgestaltung der Erfindung ist ferner vorgesehen, daß der erste Schwingungssensor mittels einer ersten Tauchspule und der zweite Schwingungssensor mittels einer zweiten Tauchspule gebildet ist.

Nach einer ersten Weiternbildung der Erfindung umfaßt das Coriolis-Massendurchfluß-Meßgerät weiters: ein Aufnehmer-Gehäuse, wobei das wenigstens eine Vibrationselement, die Erregeranordnung sowie zumindest teilweise die Sensoranordnung innerhalb des Aufnehmer-Gehäuses untergebracht sind, beispielsweise derart, daß das wenigstens eine Vibrationselement am Aufnehmer-Gehäuse fixiert ist und/oder daß der erste Magnetfelddetektor innerhalb des Aufnehmer-Gehäuses untergebracht und daran fixiert ist.

Nach einer zweiten Weiternbildung der Erfindung umfaßt das Coriolis-Massendurchfluß-Meßgerät weiters: ein Elektronik-Gehäuse, wobei die Umformerschaltung, beispielsweise nämlich sowohl die Umformerschaltung als auch der erste Magnetfelddetektor innerhalb des Elektronik-Gehäuses untergebracht, ist.

Ein Grundgedanke der Erfindung besteht darin, gelegentlich durch externe Magnetfelder auftretende Beeinflussung der Sensoranordnung von Coriolis-Massendurchfluß-Meßgeräten mittels wenigstens eines zusätzlichen Magnetfelddetektors dezidiert zu erfassen und ggf. entsprechend zu vermelden.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:

Fig. 1 ein, hier als Kompakt-Meßgerät ausgebildetes, Coriolis-Massendurchfluß-Meßgerät;

Fig. 2 schematisch nach Art eines Blockschaltbildes eine, insb. auch für ein Coriolis-Massendurchfluß-Meßgerät gemäß den Fig. 1 geeignete, Umformerschaltung mit daran angeschlossenem Meßwandler vom Vibrationtyp bzw. ein Coriolis-Massendurchfluß-Meßgerät gemäß den Fig. 1;

Fig. 3 ein Phasor-Diagramm (Zeigerdiagramm mit ruhenden Zeigern) für Signalkomponenten von mittels eines Coriolis-Massendurchfluß-Meßgeräts gemäß Fig. 1 bzw. mittels einer an einen Meßwandler vom Vibrationstyp angeschlossenen Umformerschaltung gemäß Fig. 2 generierte Schwingungsmeßsignale;

Fig. 4a, 4b schematisch Komponenten, nämlich einen Schwingungssensor sowie einen Magnetfeldsensor, einer für einen Meßwandler gemäß Fig. 2 bzw. für ein Coriolis-Massendurchfluß-Meßgerät gemäß den Fig. 1 geeigneten Sensoranordnung in einer geschnittenen Seitenansicht sowie Feldlinien von die Sensoranordnung durchdringenden Magnetfeldern;

Fig. 5a, 5b schematisch eine Ausgestaltungsvariante für eine Sensoranordnung gemäß Fig. 4a bzw. 4b in einer geschnittenen Seitenansicht sowie Feldlinien von die Sensoranordnung durchdringenden Magnetfeldern;

Fig. 6a, 6b schematisch eine weitere Ausgestaltungsvariante für eine Sensoranordnung gemäß Fig. 4a bzw. 4b in einer geschnittenen Seitenansicht sowie Feldlinien von die Sensoranordnung durchdringenden Magnetfeldern; und.

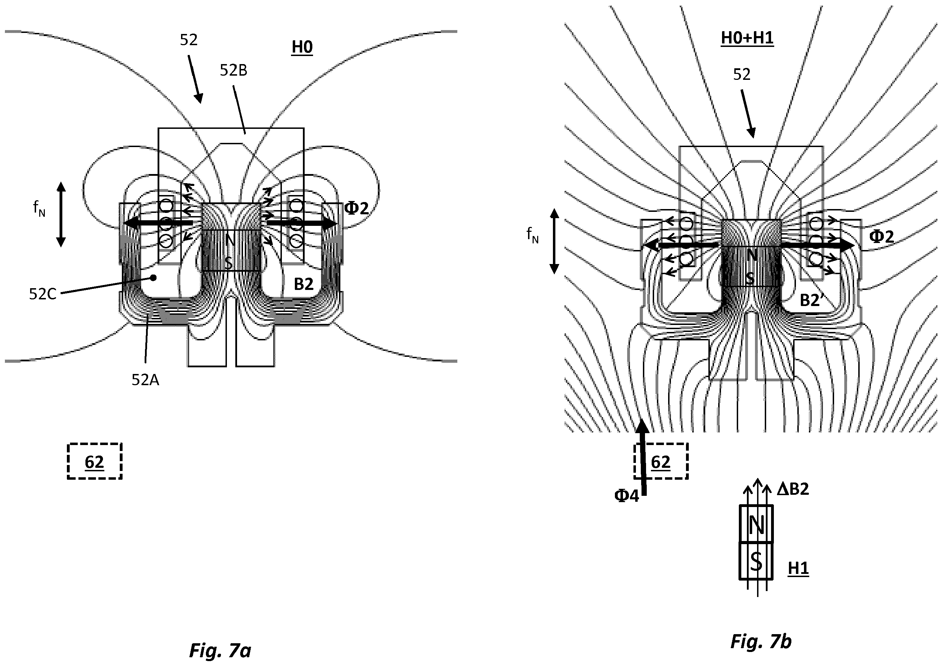

Fig. 7a, 7b schematisch einen weiteren Schwingungssensor einer Sensoranordnung gemäß Fig. 4a bzw. 4b in einer geschnittenen Seitenansicht sowie Feldlinien von nämlichen Schwingungssensor durchdringenden Magnetfeldern.

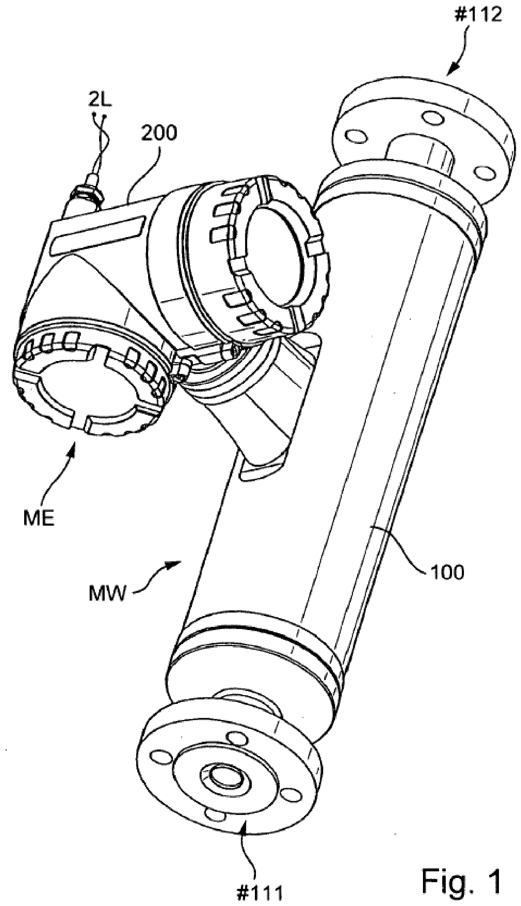

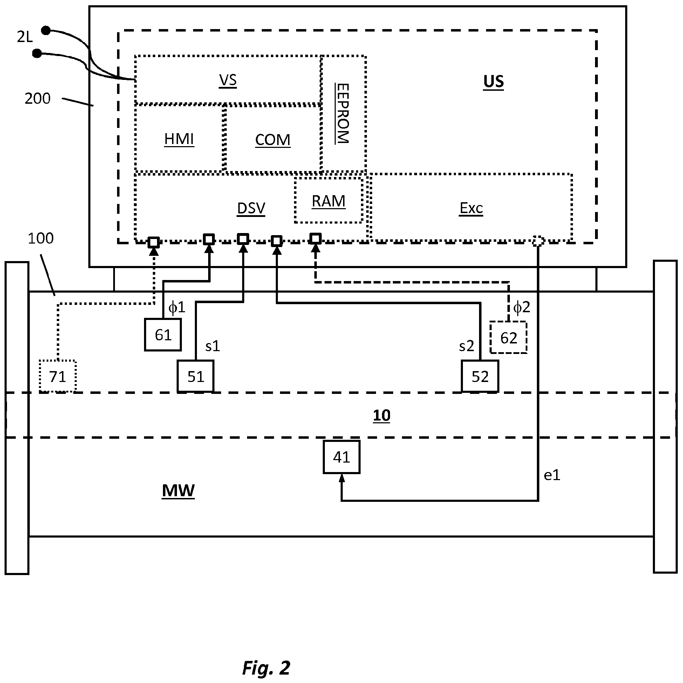

In der Fig. 1 bzw. 2 ist ein in eine (hier nicht dargestellte) Prozeßleitung - wie z.B. eine Rohrleitung einer industriellen Anlage, beispielsweise einer Abfüllanlagen oder einer Betankungsvorrichtung - einfügbares Coriolis-Massendurchfluß-Meßgerät für fließfähige, insb. fluide bzw. schüttfähige, Medien, beispielsweise nämlich auch eines zumindest zeitweise 2- oder mehrphasigen bzw. inhomogenen Meßstoffs, dargestellt. Das Coriolis-Massendurchfluß-Meßgerät dient im besonderen dem Messen und/oder Überwachen einer Massenstrom m bzw. dem Ermitteln von die Massenstrom repräsentierenden Massenstrom-Meßwerten eines in der vorbezeichneten Prozeßleitung geführten bzw. darin zumindest zeitweise strömen gelassenen fluiden Meßstoffs, beispielsweise nämlich eines Gases, einer Flüssigkeit oder einer Dispersion. Ferner kann das Coriolis-Massendurchfluß-Meßgerät dazu dienen, zusätzlich auch eine Dichte $\rho$ und/oder eine Viskosität $\eta$, des Meßstoffs zu messen, beispielsweise nämlich die Dichte repräsentierende Dichte-Meßwerte und/oder die Viskosität repräsentierende Viskositäts-Meßwerte zu ermitteln und auszugeben. Nach einer Ausgestaltung der Erfindung ist vorgesehen, das Coriolis-Massendurchfluß-Meßgerät zum Ermitteln von Massendurchfluß-Meßwerten eines zu transferierenden, beispielsweise nämlich mit einer vorgegebenen bzw. vorgebbaren Menge von einem Lieferanten an einen Abnehmer zu übergebenden Meßstoffs zu verwenden, beispielsweise ein verflüssigtes Gas, wie z.B. ein Methan und/oder Ethan und/oder Propan und/oder Buthan enthaltendes Flüssiggas bzw. ein verflüssigtes Erdgas (LNG) oder auch ein mittels flüssiger Kohlenwasserstoffe gebildetes Stoffgemisch, beispielsweise nämlich ein Erdöl oder ein flüssiger Kraftstoff. Das Coriolis-Massendurchfluß-Meßgerät kann dementsprechend beispielsweise auch als Bestandteil einer Übergabestelle für eichpflichtigen Güterverkehr, wie etwa einer Betankungsanlage, und/oder als ein Bestandteil einer Übergabestelle, beispielsweise auch nach Art der in der erwähnten der WO-A 02/060805, der WO-A 2008/013545, der WO-A 2010/099276, der WO-A 2014/151829, der WO-A 2016/058745 gezeigten Übergabestellen, ausgebildet sein.

Das - beispielsweise auch als zusätzlich die Dichte messendes Coriolis-Massendurchfluß-/Dichte-Meßgerät und/oder als zusätzlich die Viskosität messendes Coriolis-Massendurchfluß-/Viskosität-Meßgerät realisierte - Coriolis-Massendurchfluß-Meßgerät umfaßt einen über ein Einlaßende #111 sowie ein Auslaßende #112 an die Prozeßleitung angeschlossenen physikalisch-elektrischen Meßwandler MW, der dafür eingerichtet ist, im Betrieb vom Meßstoff durchströmt zu werden, sowie eine damit elektrisch gekoppelte - insb. mittels wenigstens eines Mikroprozessors gebildete und/oder im Betrieb mittels interner Energiespeicher und/oder von extern via Anschlußkabel mit elektrischer Energie versorgte - elektronische Umformerschaltung US. Das elektrische Koppeln bzw. Anschließen des Meßwandlers MW an die Umformerschaltung US kann mittels entsprechender elektrischer Anschlußleitungen und entsprechender Kabeldurchführungen erfolgen. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein.

In vorteilhafter Weise kann die, beispielsweise auch programmierbare und/oder fernparametrierbare, Umformerschaltung US ferner so ausgelegt sein, daß sie im Betrieb des Coriolis-Massendurchfluß-Meßgeräts mit einem diesem übergeordneten (hier nicht dargestellten) elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten, beispielsweise auch Statusmeldungen, austauschen kann, wie etwa aktuelle Meßwerte oder der Steuerung des Meßsystems dienende Einstell- und/oder Diagnosewerte. Dementsprechend kann die Umformerschaltung US beispielsweise eine solche Sende- und Empfangselektronik COM aufweisen, die im Betrieb von einer im vorbezeichneten Datenverarbeitungssystem vorgesehen, vom Meßsystem entfernten (zentrale) Auswerte- und Versorgungseinheit gespeist wird. Beispielsweise kann die Umformerschaltung US (bzw. deren vorbezeichnete Sende- und Empfangselektronik COM) so ausgebildet sein, daß sie über eine, ggf. auch als 4-20 mA-Stromschleife konfigurierte Zweileiter-Verbindung 2L mit dem vorbezeichneten externen elektronischen Datenverarbeitungssystem elektrisch verbindbar ist und darüber sowohl die für den Betrieb des Coriolis-Massendurchfluß-Meßgeräts erforderliche elektrische Leistung von der vorbezeichneten Auswerte- und Versorgungseinheit des Datenverarbeitungssystems beziehen als auch Meßwerte zum Datenverarbeitungssystem übermitteln kann, beispielsweise durch (Last-)Modulation eines von der Auswerte- und Versorgungseinheit gespeisten Versorgungsgleichstroms Versorgungsgleichstromes. Zudem kann die Umformerschaltung US auch so ausgebildet sein, daß sie nominell mit einer maximalen Leistung von 1 W oder weniger betrieben werden kann und/oder eigensicher ist. Die Umformerschaltung US des erfindungsgemäßen Coriolis-Massendurchfluß-Meßgeräts kann zudem beispielsweise auch modular aufgebaut sein, derart, daß diverse Elektronik-Komponenten der Umformerschaltung US, wie etwa eine Antriebselektronik Exc zum Ansteuern des Meßwandlers, eine Meß- und Steuerelektronik DSV zum Verarbeiten von vom Meßwandler bereitgestellten Meßsignalen und zum Ermitteln von Meßwerten anhand von Meßsignalen des Meßwandlers, eine interne Energieversorgungsschaltung VS zum Bereitstellen einer oder mehrerer interner Betriebsspannungen und/oder die vorbezeichnete, der Kommunikation mit einem übergeordneten Meßdatenverarbeitungssystem bzw. einem externen Feldbus dienliche Sende- und Empfangselektronik COM, jeweils auf einer eigenen Leiterplatte angeordnet und/oder jeweils mittels eines eigenen Mikroprozessores gebildet sind. Zum Visualisieren von Meßgerät intern erzeugten Meßwerten und/oder Meßgerät intern generierten Statusmeldungen, wie etwa eine Fehlermeldung oder einen Alarm, vor Ort kann das Coriolis-Massendurchfluß-Meßgerät desweiteren ein, zumindest zeitweise auch mit der Umformerschaltung US, beispielsweise nämlich deren vorbezeichneten Meß- und Steuerelektronik DSV, kommunizierendes Anzeige- und Bedienelement HMI aufweisen, wie etwa ein in vorbezeichnetem Elektronik-Gehäuse 200 hinter einem darin entsprechend vorgesehenen Fenster plaziertes LCD-, OLED- oder TFT-Display sowie eine entsprechende Eingabetastatur und/oder ein Touchscreen. Desweiteren kann die Umformerschaltung US - wie auch aus einer Zusammenschau der der Fig. 1 und 2 ohne weiteres ersichtlich - ferner beispielsweise in einem entsprechenden, insb. schlag- und/oder auch explosionsfest und/oder hermetisch dicht ausgebildeten, eigenen Elektronik-Gehäuse 200 untergebracht sein.

Bei dem Meßwandler MW handelt es sich um einen Meßwandler vom Vibrationstyp, nämlich einen Meßwandler mit wenigstens einem Vibrationselement 10, mit einer Erregeranordnung 41 und mit einer Sensoranordnung 51, 52, wobei sowohl die Erregeranordnung 41 als auch die Sensoranordnung mit der Umformerschaltung US elektrisch gekoppelt sind und wobei das wenigstens eine Vibrationselement 10 eingerichtet ist, von strömendem Meßstoff kontaktiert, beispielsweise nämlich von Meßstoff durchströmt und/oder umströmt, zu werden und währenddessen vibrieren gelassen zu werden, beispielsweise nämlich mit wenigstens einer dem Vibrationselement bzw. dem damit gebildeten Meßwandler innewohnenden Resonanzfrequenz. Die Erregeranordnung 41 des Meßwandlers MW wiederum ist dafür eingerichtet, dorthin eingespeiste elektrische Leistung in erzwungene mechanische Schwingungen des wenigstens einen Vibrationselements 10 bewirkende mechanische Leistung zu wandeln. Bei dem Meßwandler kann es sich dementsprechend beispielsweise auch um einen konventionellen - beispielsweise nämlich auch aus den eingangs erwähnten EP-A 816 807, US-A 2002/0033043, US-A 2006/0096390, US-A 2007/0062309, US-A 2007/0119264, US-A 2008/0011101, US-A 2008/0047362, US-A 2008/0190195, US-A 2008/0250871, US-A 2010/0005887, US-A 2010/0011882, US-A 2010/0257943, US-A 2011/0161017, US-A 2011/0178738, US-A 2011/0219872, US-A 2011/0265580, US-A 2011/0271756, US-A 2012/0123705, US-A 2013/0042700, US-A 2016/0313162, US-A 2017/0261474, US-A 44 91 009, US-A 47 56 198, US-A 47 77 833, US-A 48 01 897, US-A 48 76 898, US-A 49 96 871, US-A 50 09 109, US-A 52 87 754, US-A 52 91 792, US-A 53 49 872, US-A 57 05 754, US-A 57 96 010, US-A 57 96 011, US-A 58 04 742, US-A 58 31 178, US-A 59 45 609, US-A 59 65 824, US-A 60 06 609, US-A 60 92 429, US-B 62 23 605, US-B 63 11 136, US-B 64 77 901, US-B 65 05 518, US-B 65 13 393, US-B 66 51 513, US-B 66 66 098, US-B 67 11 958, US-B 68 40 109, US-B 69 20 798, US-B 70 17 424, US-B 70 40 181, US-B 70 77 014, US-B 72 00 503, US-B 72 16 549, US-B 72 96 484, US-B 73 25 462, US-B 73 60 451, US-B 77 92 646, US-B 79 54 388, US-B 83 33 120, US-B 86 95 436, WO-A 00/19175, WO-A 00/34748, WO-A 01/02816, WO-A 01/71291, WO-A 02/060805, WO-A 2005/093381, WO-A 2007/043996, WO-A 2008/013545, WO-A 2008/059262, WO-A 2010/099276, WO-A 2013/092104, WO-A 2014/151829, WO-A 2016/058745, WO-A 2017/069749, WO-A 2017/123214, WO-A 2017/143579, WO-A 85/05677, WO-A 88/02853, WO-A 89/00679, WO-A 94/21999, WO-A 95/03528, WO-A 95/16897, WO-A 95/29385, WO-A 98/02725, WO-A 99/40 394 oder PCT/EP2017/067826 bekannten - Meßwandler vom Vibrationstyp handeln. Das Vibrationselement 10 kann - wie bei Meßwandlern der in Rede stehenden Art bzw. damit gebildeten Coriolis-Massendurchfluß-Meßgeräten üblich - beispielsweise mittels eines oder mehreren, insb. zumindest abschnittsweise geraden und/oder zumindest abschnittsweise kreisbogenförmigen, Rohren mit einem von einer, insb. metallischen, Rohrwand und einem davon umhüllten Lumen gebildet sein, wobei das Rohr bzw. jedes der Rohre zudem jeweils dafür eingerichtet ist, den zumindest zeitweise strömenden fluiden Meßstoff zu führen (bzw. von nämlichem Meßstoff durchströmt zu werden) und währenddessen entsprechend vibrieren gelassen zu werden. Das Vibrationselement kann beispielsweise aber auch mittels eines oder mehreren innerhalb eines Lumens eines vom Meßstoff durchströmten Rohrs des Meßwandlers plazierten Verdrängerelementen gebildet sein, wobei das Verdrängerelement bzw. jedes der Verdrängerelemente jeweils dafür eingerichtet ist, von Meßstoff umströmt und währenddessen entsprechend vibrieren gelassen zu werden. Das wenigstens eine Vibrationselement 10 kann ferner - wie auch in Fig. 2 angedeutet bzw. aus einer Zusammenschau der Fig. 1 und 2 ohne weiteres ersichtlich - zusammen mit der Erregeranordnung 41 und der Sensoranordnung sowie ggf. weiteren Komponenten des Meßwandlers innerhalb eines Aufnehmer-Gehäuses 100 untergebracht sein. Zudem kann beispielsweise das vorbezeichnete Elektronik-Gehäuse 200 - wie auch in Fig. 1 bzw. 2 dargestellt - unter Bildung eines Coriolis-Massendurchfluß-Meßgeräts in Kompaktbauweise an nämliches Aufnehmer-Gehäuse 100 montiert sein.

Nach einer weiteren Ausgestaltung der Erfindung ist die Erregeranordnung, wie bei Meßwandlern vom Vibrationstyp durchaus üblich, mittels wenigstens eines elektro-mechanischen - beispielsweise nämliche einem elektrodynamischen, elektromagnetischen oder piezoelektrischen - Schwingungserregers 41 gebildet, der - wie auch in Fig. 2 angedeutet - beispielsweise so positioniert sein kann, daß eine damit generierte Kraft in Richtung einer durch einen Massenschwerpunkt des wenigstens einen Vibrationselements verlaufenden gedachten Kraftwirkungslinie auf das Vibrationselement wirkt, und/oder der - wie auch in Fig. 2 dargestellt - beispielsweise auch der einzige Schwingungen des Vibrationselements 10 bewirkende Schwingungserreger der Erregeranordnung bzw. des damit gebildeten Meßwandlers sein kann.

Die Umformerschaltung US des erfindungsgemäßen Coriolis-Massendurchfluß-Meßgeräts ist zudem u.a. dafür vorgesehen und entsprechend eingerichtet, ein - beispielsweise bipolares und/oder zumindest zeitweise periodisches, ggf. auch harmonisches - elektrisches Treibersignal e1 zu generieren und damit elektrische Leistung in die Erregeranordnung des Meßwandlers MW einzuspeisen, derart, daß das wenigstens eine Vibrationselement 10 zumindest anteilig Nutzschwingungen, nämlich erzwungene mechanische Schwingungen mit einer Nutzfrequenz $f_N$ ausführt, die geeignet sind, im strömendem Meßstoff vom Massenstrom abhängige, gleichwohl auf das Vibrationselement 10 zurückwirkende Corioliskräfte zu erzeugen, derart, daß den vorbezeichneten Nutzschwingungen Coriolisschwingungen, nämlich durch die Corioliskräfte zusätzlich erzwungene, vom Massenstrom m des Meßstoffs abhängige mechanische Schwingungen mit der Nutzfrequenz $f_N$ überlagert sind. Bei der Nutzfrequenz $f_N$ handelt es sich um eine durch das elektrische Treibersignal e1 vorgegebenen, beispielsweise der vorbezeichneten Resonanzfrequenz $f_R$ des Meßwandlers entsprechenden, Schwingungsfrequenz der erzwungenen mechanischen Schwingungen des Vibrationselements ($f_N = f_R$). Das Treibersignal e1 kann dementsprechend beispielsweise ein die vorbezeichnete, die Nutzfrequenz $f_N$ bestimmende Signalkomponente $e1_N$ bildendes harmonisches elektrisches Signal oder beispielsweise auch ein sich aus mehreren (spektrale) Signalkomponenten zusammensetzendes, gleichwohl eine die Nutzfrequenz $f_N$ bestimmende spektrale Nutzkomponente $e1_N$ enthaltendes, mehrfrequentes elektrisches Signal sein. Bei den mittels Erregeranordnung 41 und daran angeschlossener Umformerschaltung US angeregten Nutzschwingungen kann es ferner, wie bei Coriolis-Massendurchfluß-Meßgeräten durchaus üblich, beispielsweise um Biegeschwingungen des wenigstens einen Vibrationselements 10 um ein zugehörige Ruhelage handeln, wobei als Nutzfrequenz $f_N$ beispielsweise eine auch von der Dichte und/oder der Viskosität des im Meßwandler geführten bzw. dessen Vibrationselement 10 kontaktierenden Meßstoffs abhängige momentane Resonanzfrequenz eines lediglich einen einzigen Schwingungsbauch aufweisenden Biegeschwingungsgrundmodes des wenigstens einen Vibrationselements 10 und/oder eine niedrigste momentane Resonanzfrequenz des wenigstens einen Vibrationselements 10 ausgewählt, nämlich mittels des Treibersignals e1 eingestellt sein kann. Zum Erzeugen des Treibersignals e1 bzw. zum Einstellen der Nutzfrequenz $f_N$ kann die Umformerschaltung US, wie bei Coriolis-Massendurchfluß-Meßgeräten durchaus üblich, beispielsweise eine entsprechende, insb. mittels einer oder mehreren dem Ermitteln und Einstellen der Nutzfrequenz $f_N$ dienlichen Phasenregelschleifen (PLL - phase locked loop) gebildete, Antriebselektronik Exc aufweisen. Nach einer weiteren Ausgestaltung der Erfindung weist die Antriebselektronik Exc einen digitalen Frequenzausgang auf. Zudem ist die Antriebselektronik Exc ferner auch dafür eingerichtet, an nämlichem Frequenzausgang eine Frequenzfolge, nämlich eine Folge von die für das Treibersignal e1 eingestellte Signalfrequenz, beispielsweise nämlich die momentan eingestellte Nutzfrequenz (bzw. die Signalfrequenz von dessen Signalkomponente eN1), quantifizierenden digitalen Frequenzwerten auszugeben.

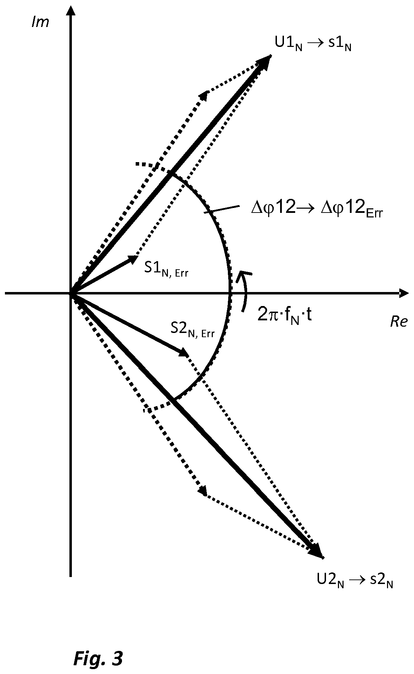

Die Sensoranordnung des Meßwandlers wiederum ist dafür eingerichtet, mechanische Schwingungen des wenigstens einen Vibrationselements 10, nicht zuletzt auch erzwungene mechanische Schwingungen des wenigstens einen Vibrationselements 10, zu erfassen und jeweils zumindest anteilig Schwingungsbewegungen des wenigstens einen Vibrationselements 10 repräsentierende Schwingungsmeßsignale (s1, s2) bereitzustellen. Zum Erfassen mechanischer Schwingungen des wenigstens einen Vibrationselements weist die Sensoranordnung des erfindungsgemäßen Coriolis-Massendurchfluß-Meßgeräts einen, beispielsweise mittels einer ersten Tauchspule gebildeten, elektrodynamischen ersten Schwingungssensor 51 und wenigstens einen, beispielsweise mittels einer zweiten Tauchspule gebildeten und/oder zum ersten Schwingungssensor 51 baugleichen, elektrodynamischen zweiten Schwingungssensor 52 auf. Im besonderen ist der Schwingungssensor 51 dafür eingerichtet, Schwingungsbewegungen des wenigstens einen Vibrationselements 10 an einem ersten Meßpunkt in ein elektrisches erstes Schwingungsmeßsignal s1 der Sensoranordnung zu wandeln, derart, daß - wie auch in Fig. 3 angedeutet - nämliches Schwingungsmeßsignal s1 wenigstens eine (von der Zeit t abhängige) erste Nutzkomponente $s1_N$, nämlich eine Wechselspannungskomponente mit einer der Nutzfrequenz $f_N$ entsprechenden Frequenz aufweist, und ist der Schwingungssensor 52 dafür eingerichtet, Schwingungsbewegungen des wenigstens einen Vibrationselements an einem vom ersten Meßpunkt entfernten zweiten Meßpunkt in ein elektrisches zweites Schwingungsmeßsignal s2 der Sensoranordnung zu wandeln, derart, daß - wie auch in Fig. 3 angedeutet - nämliches Schwingungsmeßsignal s2 wenigstens eine (von der Zeit t abhängige) zweite Nutzkomponente $s2_N$, nämlich eine Wechselspannungskomponente mit einer der Nutzfrequenz $f_N$ entsprechenden Frequenz aufweist. Indem es sich bei jedem der beiden Schwingungssensoren 51, 52 jeweils um einen elektrodynamischen Schwingungssensor handelt, weisen dementsprechend die Nutzkomponente $s1_N$ eine von der Nutzfrequenz $f_N$ sowie von einem ersten magnetischen Fluß $\Phi1$, nämlich einem magnetischen Fluß durch den Schwingungssensor 51 abhängige Amplitude $U1_N$ (bzw. abhhängigen Spannungspegel) und die Nutzkomponente $s2_N$ eine von der Nutzfrequenz $f_N$ sowie von einem zweiten magnetischen Fluß $\Phi2$, nämlich einem magnetischen Fluß durch den Schwingungssensor 52 abhängige Amplitude $U2_N$ (bzw. abhängigen Spannungspegel) auf. Jeder der beiden Schwingungssensoren kann, wie bei Meßwandlern der in Rede stehenden Art durchaus üblich, beispielsweise jeweils mittels einer Tauchspule gebildet sein. Dementsprechend ist nach einer weiteren Ausgestaltung der Erfindung vorgesehen, daß der erste Schwingungssensor einen, beispielsweise nämlich unter Bildung des ersten Meßpunkts mechanisch mit dem wenigstens einen Vibrationselement verbundenen, ersten Permanentmagneten sowie eine, beispielsweise mechanisch mit dem wenigstens einen Vibrationselement und/oder mit dem vorbezeichneten Aufnehmer-Gehäuse verbundene, erste Luftspule aufweist und daß der zweite Schwingungssensor einen, beispielsweise nämlich unter Bildung des zweiten Meßpunkts mechanisch mit dem wenigstens einen Vibrationselement verbundenen, zweiten Permanentmagneten sowie eine, beispielsweise mechanisch mit dem wenigstens einen Vibrationselement und/oder mit dem vorbezeichneten Aufnehmer-Gehäuse verbundene, zweite Luftspule aufweist. Der erste Permanentmagnet bildet einen den magnetischer Fluß $\Phi1$ führenden ersten Luftspalt innerhalb dem die erste Luftspule zumindest teilweise positioniert ist und der zweite Permanentmagnet bildet einen den magnetischer Fluß $\Phi2$ führenden zweiten Luftspalt innerhalb dem die zweite Luftspule zumindest teilweise positioniert ist. Ferner sind der erste Permanentmagnet und die erste Luftspule eingerichtet, durch Schwingungsbewegungen des wenigstens einen Vibrationselements relativ zueinander bewegt zu werden und eine als Schwingungsmeßsignal s1 dienliche erste Induktionsspannung ($u_{i1}$) zu generieren, und sind der zweite Permanentmagnet und die zweite Luftspule eingerichtet, durch Schwingungsbewegungen des wenigstens einen Vibrationselements relativ zueinander bewegt zu werden und eine als Schwingungsmeßsignal s2 dienliche zweite Induktionsspannung ($u_{i2}$) zu

generieren, wobei die vorbezeichneten ersten und zweiten Induktionsspannungen entsprechend dem Induktionsgesetzt (für Bewegungsinduktion):

$$u_{i1} = \frac{d\Psi1}{dt} \sim \Psi1 \cdot 2\pi \cdot f_N \cdot \cos(2\pi \cdot f_N \cdot t) \sim N1 \cdot \Phi1 \cdot 2\pi \cdot f_N \cdot \cos(2\pi \cdot f_N \cdot t) \rightarrow s1 \text{ bzw.}$$

$$u_{i2} = \frac{d\Psi2}{dt} \sim \Psi2 \cdot 2\pi \cdot f_N \cdot \cos(2\pi \cdot f_N \cdot t) \sim N2 \cdot \Phi2 \cdot 2\pi \cdot f_N \cdot \cos(2\pi \cdot f_N \cdot t) \rightarrow s2$$

jeweils von einem jeweiligen Verkettungs- bzw. Induktionsfluß ($\Psi1 = N1 \cdot \Phi1$ bzw. $\Psi2 = N2 \cdot \Phi2$), nämlich einem gesamtem magnetischen Fluß innerhalb der jeweiligen ersten bzw. zweiten Luftspule, mithin vom jeweiligen magnetischen Fluß $\Phi1$ bzw. $\Phi2$ und einer jeweils zugehörigen Windungszahl (N1 bzw. N2) abhängig sind.

Die vom Meßwandler MW generierten Schwingungssmeßsignale s1, s2 sind im weiteren Verlauf der Umformerschaltung US, beispielsweise via elektrischer Verbindungsleitungen, zugeführt um dort, beispielsweise mittels digitaler Signalverarbeitung (DSV), entsprechend verarbeitet, beispielsweise nämlich vorverstärkt, gefiltert und digitalisiert und hernach entsprechend ausgewertet zu werden.

Die Schwingungssensoren 51, 52 sind nach einer weiteren Ausgestaltung der Erfindung zudem so angeordnet, daß im Falle einer Anregung der vorbezeichneten Coriolisschwingungen des wenigstens einen Vibrationselements 10 jede der Nutzkomponenten $s1_N$, $s2_N$ der Schwingungsmeßsignale s1 bzw. s2 zudem jeweils auch einen vom Massenstrom m des durch den Meßwandler MW strömenden Meßstoff abhängigen, beispielsweise relativ zum Treibersignal e1 bzw. dessen Nutzkomponente $e1_N$ meßbaren, Phasenwinkel aufweist; dies im besonderen in der Weise, daß, wie auch in Fig. 3 angedeutet, zwischen der Nutzkomponente $s1_N$ des Schwingungssignals s1 und der Nutzkomponente $s2_N$ des Schwingungssignals s2 eine von nämlicher Massenstrom m abhängige Phasendifferenz $\Delta\varphi12$ ($\Delta\varphi12 = f(m)$), nämlich eine Differenz zwischen dem Phasenwinkel der ersten Nutzkomponente $s1_N$ und dem Phasenwinkel der zweiten Nutzkomponent $s2_N$ existiert bzw. daß die Schwingungsmeßsignale s1, s2 einer Änderung des Massenstroms des im Meßwandler geführten Meßstoffs mit einer Änderung nämlicher Phasendifferenz $\Delta\varphi12$ ($\Delta\varphi12^*$) folgen. Die Schwingungssensoren 51, 52 können, wie derartigen Meßwandlern durchaus üblich bzw. auch in Fig. 2 angedeutet, dementsprechend beispielsweise jeweils im gleichen Abstand zu einem Massenschwerpunkt des wenigstens einen Vibrationselements 10, beispielsweise also zum Massenschwerpunkt des wenigstens einen Rohrs bzw. zum Massenschwerpunkt des wenigstens einen Verdrängerelements, positioniert sein, derart, daß in Strömungsrichtung gesehen der Schwingungssensors 51 einlaßseitig am wenigstens einen Vibrationselement 10 bzw. in dessen Nähe und der Schwingungssensor 52 auslaßseitig am wenigstens einen Vibrationselement 10 bzw. in dessen Nähe angeordnet sind. Zudem können die beiden Schwingungssensoren 51, 52 auch die einzigen dem Erfassen von Schwingungen des wenigstens einen Vibrationselement 10 dienlichen Schwingungssensoren sein, derart, daß die Sensoranordnung außer nämlichen Schwingungssensoren 51, 52 keinen weiteren Schwingungssensor aufweist. Nach einer weiteren Ausgestaltung der Erfindung ist ferner vorgesehen, daß die Sensoranordnung zum Erfassen einer Temperatur des Meßwandlers an einem Temperatur-Meßpunkt wenigstens einen Temperatursensor 61 aufweist, der eingerichtet ist, ein Temperaturmeßsignal, nämlich ein die Temperatur am Temperatur-Meßpunkt repräsentierendes Meßsignal, insb. mit einer von der Temperatur abhängigen elektrischen Spannung und/oder einem von der Temperatur abhängigen elektrischen Strom, bereitzustellen. Alternativ oder in Ergänzung kann die Sensoranordnung beispielsweise auch wenigstens einen dem Erfassen von mechanischen Spannungen innerhalb der Meßwandlers dienlichen Dehnungssensor aufweisen.

Die Umformerschaltung US ist, wie bereits erwähnt, außer für die Erzeugung des Treibersignals e1 ferner auch dafür vorgesehen bzw. eingerichtet, die Schwingungsmeßsignale s1, s2 zu empfangen und auszuwerten, nämlich anhand der Schwingungsmeßsignale s1, s2, beispielsweise nämlich anhand der vorbezeichneten Phasendifferenz $\Delta\varphi12$ zwischen den ersten und zweiten Nutzkomponenten, den Massenstrom repräsentierende Massenstrom-Meßwerte zu ermitteln, beispielsweise nämlich auch in Form von Analogwerten und/oder in Form von Digitalwerten auszugeben. Nach einer weiteren Ausgestaltung der Erfindung ist die Umformerschaltung US dementsprechend ferner dafür eingerichtet, anhand der Schwingungsmeßsignale s1, s2 zunächst die Phasendifferenz $\Delta\varphi12$ zu ermitteln. Zudem kann die Umformerschaltung US auch eingerichtet sein, von wenigstens einem der anliegenden Schwingungsmeßsignale s1, s2 den jeweiligen vorbezeichnete Phasenwinkel von dessen jeweiliger Nutzkomponente $s1_N$, $s2_N$, beispielsweise relativ zum Treibersignal e1 bzw. dessen vorbezeichneter Nutzkomponente $e1_N$, zu ermitteln und/oder anhand wenigstens eines der Schwingungsmeßsignale s1, s2 die Nutzfrequenz $f_N$ zu ermitteln, beispielsweise auch im Betrieb zumindest eine Phasenfolge, nämlich eine Sequenz von den Phasenwinkel einer der ersten und zweiten Nutzkomponenten entsprechend quantifizierenden digitalen Phasenwerten und/oder eine Frequenzfolge, nämlich eine Sequenz von die Nutzfrequenz $f_N$ quantifizierenden digitalen Frequenzwerten zu generieren, derart, daß die Phasenfolge einem zeitlichen Verlauf des Phasenwinkel der entsprechenden Nutzkomponente bzw. die Frequenzfolge einem zeitlichen Verlauf der Nutzfrequenz entspricht. Die Ermittlung der Phasenwinkel bzw. die Generierung der vorbezeichneten Phasenfolge kann beispielsweise, wie bei Coriolis-Massendurchfluß-Meßgeräten durchaus üblich, mittels einer in der Umformerschaltung US durchgeführten Quadraturdemodulation (Q/I-Demodulation) des jeweiligen Schwingungsmeßsignals mit einem die Nutzfrequenz aufweisenden ersten harmonischen Referenzsignal (Q) und einem dazu um 90° phasenverschobenen zweiten harmonischen Referenzsignal (I) realisiert sein. Nicht zuletzt für den erwähnten Fall, daß die mittels Treibersignals e1 bewirkten Nutzschwingungen Resonanzschwingungen des wenigstens einen Vibrationselements 10 sind, kann die Nutzfrequenz $f_N$ der Schwingungsmeßsignale s1, s2 als Maß für die Dichte und/oder die Viskosität des Meßstoffs dienen und kann dementsprechend mittels der Umformerschaltung US die Dichte und/oder die Viskosität basierend auf der vorbezeichneten Frequenzfolge ermittelt werden. Nicht zuletzt für den vorbezeichneten Fall, daß die Sensoranordnung einen Temperatursensor 61 und/oder einen Dehnungssensor aufweist, ist die Umformerschaltung US nach einer weiteren Ausgestaltung der Erfindung ferner auch dafür eingerichtet, das vom Temperatursensor generierte Temperaturmeßsignal bzw. das vom Dehnungssensor generierte Dehnungsmeßsignal zu empfangen und zu verarbeiten, insb. nämlich zu digitalisieren und auszuwerten; dies beispielsweise derart, daß die Umformerschaltung US anhand des wenigstens einen Temperaturmeßsignals eine Temperatur des Verdrängerelments und/oder ein Temperatur des Meßstoffs ermittelt.

Nach einer weiteren Ausgestaltung der Erfindung ist die Umformerschaltung US ferner eingerichtet, anhand des Schwingungsmeßsignals s1 eine erste Nutzkomponentenfolge, nämlich eine Sequenz von die Amplitude $U1_{N1}$ der ersten Nutzkomponente $s1_N$ quantifizierenden digitalen Amplitudenwerten $U1_{N1}[m]$ ($m \in \mathbf{N}$ - natürliche Zahlen) zu generieren und ist die Umformerschaltung zudem eingerichtet, anhand des Schwingungsmeßsignals s2 eine zweite Nutzkomponentenfolge, nämlich eine Sequenz von die Amplitude $U2_N$ der zweiten Nutzkomponente $s2_N$ quantifizierenden digitalen Amplitudenwerten $U2_{N1}[n]$ ($n \in N$) zu generieren, beispielsweise nämliche derart, daß die Amplitudenwerten $U1_{N1}[m]$ zu äquidistant aufeinanderfolgenden Zeitpunkten $t_m = m \cdot T_{s1}$, mithin mit einer Aktualisierungsrate $f_{s1} = 1 / (t_{m+1} - t_m) = 1 / T_{s1}$ bzw. die die Amplitudenwerten $U2_N[n]$ zu äquidistanten aufeinanderfolgenden Zeitpunkten $t_n = n \cdot T_{s2}$, mithin mit einer Aktualisierungsrate $f_{s2} = 1 / (t_{n+1} - t_n) = 1 / T_{s2}$ ermitteltet, derart daß die erste Nutzkomponentenfolge einem zeitlichen Verlauf der Amplitude $U1_N$ der ersten Nutzkomponente $s1_N$ bzw. die zweite Nutzkomponentenfolge einem zeitlichen Verlauf der Amplitude $U2_{N1}$ der zweiten Nutzkomponente $s2_N$ zumindest näherungsweise entsprechen. Die vorbezeichneten Aktualisierungsraten $f_{s1}$, $f_{s2}$ können beispielsweise so gewählt sein, daß sie gleich groß sind ($f_{s1} = f_{s2}$) und/oder daß ein Amplitudenwert $U1_{N1}[m]$ jeweils im wesentlichen zeitlich zu einem korrespondierenden Amplitudenwert $U2_{N1}[n]$ ermittelt werden ($t_m = t_n$). Darüberhinaus kann die Umformerschaltung US ferner auch eingerichtet sein, anhand des Schwingungsmeßsignals s1 eine erste Oberschwingungskomponentenfolge, nämlich eine Sequenz von die Amplitude $U1_{N2}$ der ersten Oberschwingungskomponente $s1_{N2}$ quantifizierenden digitalen Amplitudenwerten $U1_{N2}[m/2]$ ($m \in \mathbf{N}$, m > 1) zu generieren und ist die Umformerschaltung zudem eingerichtet, anhand des Schwingungsmeßsignals s2 eine zweite Oberschwingungskomponentenfolge, nämlich eine Sequenz von die Amplitude $U2_{N2}$ der zweiten Oberschwingungskomponente $s2_{N2}$ quantifizierenden digitalen Amplitudenwerten $U2_{N2}[n/2]$ ($n \in \mathbf{N}$, n > 1) zu generieren, beispielsweise nämliche derart, daß die Amplitudenwerten $U1_{N2}[m/2]$ zu äquidistant aufeinanderfolgenden Zeitpunkten $0{,}5 \cdot t_m = 0{,}5 \cdot m \cdot T_{s1}$, mithin mit einer Aktualisierungsrate $2f_{s1} = 2 / (t_{m+1} - t_m) = 2 / T_{s1}$ bzw. die die Amplitudenwerten $U2_{N2}[n/2]$ zu äquidistanten aufeinanderfolgenden Zeitpunkten $0{,}5 \cdot t_n = 0{,}5 \cdot n \cdot T_{s2}$, mithin mit einer Aktualisierungsrate $2f_{s2} = 2 / (t_{n+1} - t_n) = 2 / T_{s2}$ ermitteltet, derart daß die erste Oberschwingungskomponentenfolge einem zeitlichen Verlauf der Amplitude der ersten Oberschwingungskomponente $s1_{N2}$ bzw. die zweite Oberschwingungskomponentenfolge einem zeitlichen Verlauf der Amplitude der zweiten Oberschwingungskomponente $s2_{N2}$ zumindest näherungsweise entsprechen. Die Ermittlung der Oberschwingungskomponenten $s1_N$, $s2_N$ bzw. die Generierung der vorbezeichneten ersten und zweiten Oberschwingungskomponentenfolge kann beispielsweise ebenfalls mittels Quadraturdemodulation (Q/I-Demodulation) des jeweiligen Schwingungsmeßsignals s1 bzw. s2, hier nämlich mit einem das entsprechende Vielfache, beispielsweise nämlich das Doppelte, der Nutzfrequenz aufweisenden vierten harmonischen Referenzsignal (Q2) und einem dazu um 90° phasenverschobenen vierten harmonischen Referenzsignal (I2) realisiert sein. Alternativ oder in Ergänzung können die Nutz- und/oder die Oberschwingungkomponenten bzw. deren jeweiligen Amplituden $U1_{N1}$, $U2_{N1}$, $U1_{N2}$ bzw. $U2_{N2}$ beispielsweise jeweils auch mittels einer in der Umformerschaltung US durchgeführten Fourier-Analyse der Schwingunsgmeßsignale s1, s2, beispielsweise nämlich einer auf die Schwingunsgmeßsignale s1, s2 angewendeten diskreten Fouriertransformation (DFT), ermittelt werden.

Zum Verarbeiten der vom Meßwandler gelieferten Schwingungsmeßsignale s1, s2, ggf. auch des vorbezeichneten Temperatur- und/oder Dehnungsmeßsignals, beispielsweise nämlich auch zum Ermitteln der Massenstrom-Meßwerte und ggf. auch zum Ermitteln der Dichte-Meßwerte und/oder der Viskositäts-Meßwerte, kann die Umformerschaltung US, wie bereits angedeutet, ferner eine entsprechende Meß- und Steuerelektronik DSV aufweisen, die, wie in Fig. 2 schematisch dargestellt, mit dem Meßwandler MW bzw. dessen Sensoranordnung 51, 52 elektrisch verbunden ist, beispielsweise derart, daß von der Meß- und Steuerelektronik DSV ein erster Meßsignaleingang der Umformerschaltung US für das Schwingungsmeßsignal s1 sowie wenigstens ein zweiter Meßsignaleingang der Umformerschaltung US für das Schwingungsmeßsignal s2 gebildet sind. Die Meß- und Steuerelektronik DSV kann vorteilhaft dafür eingerichtet sein, die zugeführten Schwingungsmeßsignale s1, s2, und ggf. auch die Temperatur- und/oder Dehnungsmeßsignale digital zu verarbeiten, beispielsweise nämlich mittels wenigstens einem Mikroprozessor und/oder wenigstens einem digitalen Signalprozessor (DSP) und/oder mittels eines programmierbaren Logikbausteins (FPGA) und/oder mittels eines kundenspezifisch programmierten Logikbausteins (ASIC) gebildet sein. Die im Betrieb des Coriolis-Massendurchfluß-Meßgeräts in einem oder mehreren der vorbezeichneten Mikroprozessoren bzw. digitalen Signalprozessoren der Umformerschaltung US ausgeführten Programm-Codes können jeweils z.B. in einem oder mehreren nicht flüchtigen Datenspeichern (EEPROM) der Umformerschaltung US persistent gespeichert sein und beim Starten derselben in einen in der Umformerschaltung US bzw. der Meß- und Steuerelektronik DSV vorgesehenen, z.B. im Mikroprozessor integrierten, flüchtigen Datenspeicher (RAM) geladen werden. Die Schwingungsmeßsignale s1, s2 sind für eine Verarbeitung im Mikroprozessor bzw. im digitalen Signalprozessor mittels entsprechender Analog-zu-digital-Wandler (A/D) selbstverständlich zunächst in entsprechende Digitalsignale umzuwandeln, beispielsweise nämlich indem die jeweilige Signalspannung der Schwingungsmeßsignale s1, s2 digitalisiert wird, vgl. hierzu beispielsweise die eingangs erwähnten US-B 63 11 136 oder US-A 2011/0271756. Dementsprechend ist nach einer weiteren Ausgestaltung der Erfindung in der Umformerschaltung US, beispielsweise nämlich in der vorbezeichneten Meß- und Steuerelektronik DSV, ein erster Analog-zu-Digital-Wandler für das Schwingungsmeßsignal s1 sowie ein zweiter Analog-zu-Digital-Wandler für das Schwingungsmeßsignal s2 und/oder ist in der in der Umformerschaltung US wenigstens ein nicht flüchtiger elektronischer Datenspeicher EEPROM vorgesehen, der dafür eingerichtet ist, digitale Daten, beispielsweise nämlich auch ohne eine angelegte Betriebsspannung, vorzuhalten. Mittels der Meß- und Steuerelektronik DSV kann zudem auch die vorbezeichnete Phasenfolge und/oder die vorbezeichnete Frequenzfolge generiert werden, beispielsweise nämlich auch an einem entsprechenden digitalen Phasenausgang bzw. an einem entsprechenden digitalen Frequenzausgang ausgeben und so für eine weitere Verarbeitung in der Umformerschaltung US bereitgestellt werden. Für den Fall, daß die Umformerschaltung US mittels der vorbezeichnete Antriebselektronik Exc sowie mittels der vorbezeichneten Meß- und Steuerelektronik DSV gebildet ist, kann deren Phasenausgang mit einem Phaseneingang eines in der Antriebselektronik Exc vorgesehenen, beispielsweise auch einen Bestandteil der vorbezeichneten Phasenregelschleife (PLL) bildenden, Phasenkomparators elektrisch verbunden sein und kann zudem nämlicher Phasenkomparator eingerichtet sein, eine anhand der Phasenfolge eine Phasendifferenz zwischen der vorbezeichneter Signalkomponente $e1_N$ des Treibersignals e1 und wenigstens einer der Nutzkomponenten $s1_N$, $s2_N$ festzustellen und/oder ein Ausmaß nämlicher Phasendifferenz zu ermitteln. Nach einer weiteren Ausgestaltung der Erfindung ist die Meß- und Steuerelektronik DSV ferner auch dafür eingerichtet, die vorbezeichneten ersten und zweiten Nutzkomponentenfolgen zu erzeugen und zumindest eine der Nutzkomponentenfolgen an einem digitalen Amplitudenausgang auszugeben. Der vorbezeichnete Amplitudenausgang der Meß- und Steuerelektronik DSV kann ferner beispielsweise auch mit einem eine Amplitude der Schwingungen des wenigstens einen Vibrationselements 10 erfassenden Amplitudeneingang der Antriebselektronik Exc elektrisch verbunden sein und die Antriebselektronik Exc kann zudem dafür eingerichtet sein, basierend auf der Amplitudenfolge das Treibersignal e1 so zu generieren, daß die Schwingungen des wenigstens einen Vibrationselements bzw. dessen Nutzschwingungen eine dafür vorgegeben Schwingungsamplitude erreichen bzw. nicht dauerhaft über- oder unterschreiten.

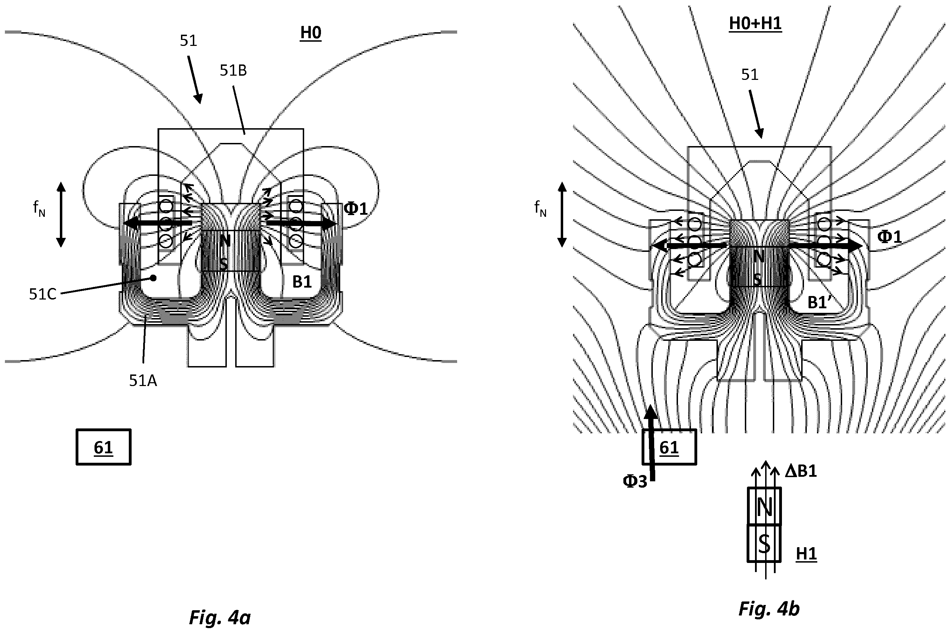

Wie bereits erwähnt, sind die Nutzkomponenten der beiden Schwingungsmeßsignale s1, s2 bzw. deren Amplituden, bedingt durch das Wirkprinzip der beiden elektrodynamischen Schwingungssensoren, von der zeitlichen Änderung des jeweiligen magnetischen Flusses innerhalb des Schwingungssensors, im Falle einer Tauchspule als Schwingungssensor nämlich des Verkettungs- bzw. Induktionsflusses innerhalb der jeweiligen Luftspule, abhängig; dies im besonderen auch in der Weise, daß eine von außerhalb des Coriolis-Massendurchfluß-Meßgeräts während dessen Meßbetriebs bewirkte zusätzliche Beeinflussung des bekannten inneren Magnetfeldes H0 bzw. eine damit einhergehende Beeinflussung eines bekannten, nämlich durch die vorbezeichnete Kalibrierung ermittelten Änderungsverhaltens ($\Delta\Phi1/\Delta t$, $\Delta\Phi2/\Delta t$) des magnetischen Flusses innerhalb des ersten und/oder zweiten Schwingungssensors, nicht zuletzt auch ein Änderungsverhalten ($\Delta\Phi1$, $\Delta\Phi2$) des magnetischen Flusses $\Phi1$ bzw. $\Phi2$ pro Schwingungsperiode der Nutzschwingungen, durch ein externes, nämlich von außerhalb des Coriolis-Massendurchfluß-Meßgeräts verursachtes, gleichwohl sich auch innerhalb des Coriolis-Massendurchfluß-Meßgeräts ausbreitendes Magnetfeld H1 eine unerwünschte, beispielsweise nämlich zu erhöhten Fehlern bei der Messung des Massenstroms führenden, Beeinflussung der ersten und/oder zweiten Nutzkomponente, mithin eine Beeinträchtigung der Funktionstüchtigkeit der Sensoranordnung bewirken kann. Ursachen für ein solches externes Magnetfeld H1 kann beispielsweise ein in der Nähe des jeweiligen Coriolis-Massendurchfluß-Meßgeräts erzeugtes elektrisches Feld sein, etwa auf Grund von in der Nähe des Coriolis-Massendurchfluß-Meßgeräts betriebene Elektromotoren, Transformatoren, Wechselrichter oder hohe elektrische (Gleich-)Ströme führende Anlagenteilen, wie z.B. Stromschienen, und/oder kann - wie auch in Fig. 4b angedeutet - ein außerhalb des jeweiligen Coriolis-Massendurchfluß-Meßgeräts bzw. in dessen Nähe positionierter Magnet, beispielsweise ein Elektromagnet oder ein Permanentmagnet, sein. Im Falle von Tauchspulen als Schwingungssensoren ist das vorbezeichnete innere Magnetfeld H0 jeweils im wesentlichen durch deren jeweilige Permanentmagneten bzw. das vorbezeichnete Änderungsverhalten des magnetischen Flusses im wesentlichen durch die den Schwingungsbewegungen des wenigstens einen Vibrationselements entsprechenden Bewegungen des jeweiligen Permanentmagneten im zugehörigen Luftspalt bestimmt und kann das externe Magentfeld H1 dazu führen, daß zumindest eine der dem inneren Magnetfeld H0 entsprechenden vorbezeichneten Flußdichten (B1 bzw. B2) des jeweiligen magnetischen Flusses $\Phi1$

bzw. Φ2 verändert wird (B1 -> B1' = B1 + ΔB1, B1 → B2' = B2 + ΔB2). Eine solche unerwünschte Beeinflussung der ersten und/oder zweiten Nutzkomponente $s1_N$, $s2_N$ bzw. Beeinträchtigung der Funktionstüchtigkeit der Sensoranordnung durch ein externes Magnetfeld H1 kann beispielsweise auch darin bestehen, daß - wie auch in Fig. 3 angedeutet - zumindest eine der Nutzkomponenten eine zusätzliche frequenzgleiche Störkomponente ($S1_{N, Err}$, $S2_{N, Err}$) enthält, derart, daß der vorbezeichnete Phasenwinkel nämlicher Nutzkomponente, mithin auch die vorbezeichnete Phasendifferenz $\Delta\varphi12$ ($\Delta\varphi12 \rightarrow \Delta\varphi12_{Err}$) dann einen Phasenfehler, nämlich einen vom externen Magnetfeld H1 bzw. dessen Einfluß auf den im jeweiligen Schwingungssensor letztlich etablierten magnetischen Fluß abhängig Anteil aufweist; dies beispielsweise auch derart, daß die Integrität zumindest eines der Schwingungsmeßsignale bzw. der Massenstrom-Meßwerte inakzeptabel herabgesetzt ist bzw. daß nämlicher Phasenfehler eine Meßgenauigkeit, mit der die Umformerschaltung US die Massenstrom-Meßwerte dann ermittelt aus einem für das Coriolis-Massendurchfluß-Meßgerät spezifizierten Toleranzbereich führt.

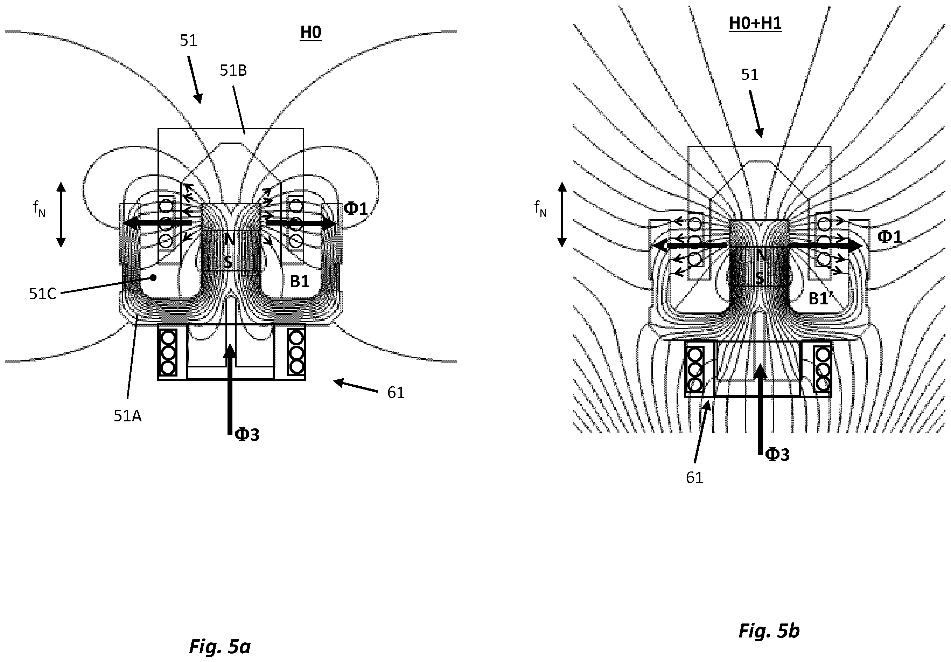

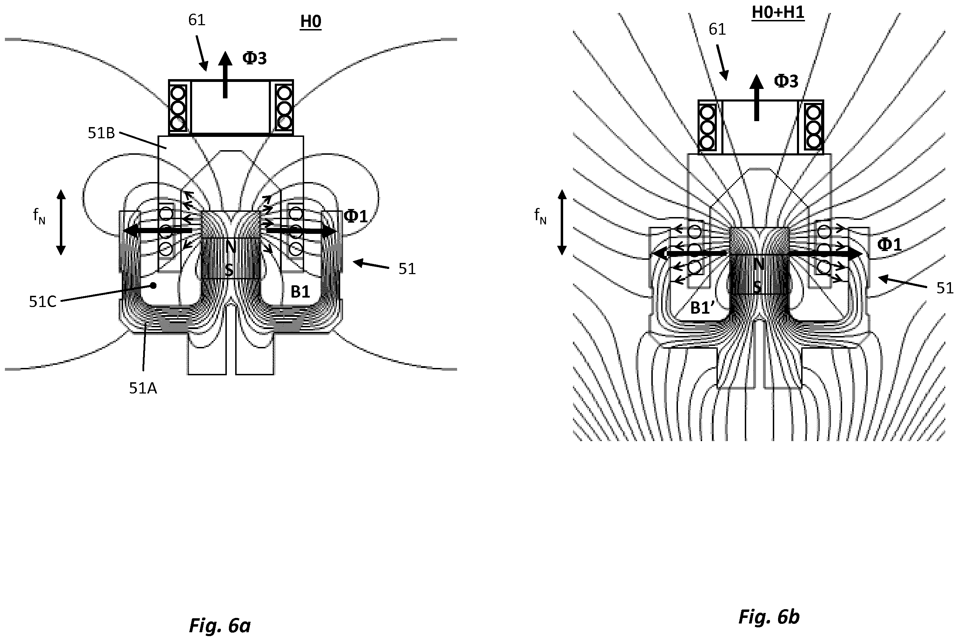

Um ein möglichst zeitnahes, gleichwohl präzises Detektieren eines - ggf. die Funktionstüchtigkeit der Sensoranordnung beeinträchtigenden bzw. einen außerhalb einer Spezifikation des Coriolis-Massendurchfluß-Meßgeräts liegenden erhöhten Meßfehlers provozierenden - externen Magnetfeldes H1 zu ermöglichen, weist die Sensoranordnung des erfindungsgemäßen Meßsystems - wie auch in Fig. 4a und 4b schematisch dargestellt - ferner wenigstens einen dem Erfassen eines - hier sich insbesondere nämlich durch Überlagerung des internen Magnetfeldes H0 und des externen Magnetfeldes H1 ergebenden - zumindest anteilig auch außerhalb der Schwingungssensoren 51, 52 etablierten Magnetfeldes H0 + H1 dienlichen ersten Magnetfelddetektor 61 auf. Der Magnetfelddetektor 61 ist im besonderen eingerichtet, Änderungen des Magnetfeldes H0 + H1 an einem sowohl vom vorbezeichneten ersten Meßpunkt als auch vom vorbezeichneten zweiten Meßpunkt entfernten dritten Meßpunkt in ein, beispielsweise elektrisches, erstes Magnetfeldsignal $\phi1$ der Sensoranordnung zu wandeln, das eine von einem - hier sowohl außerhalb des Schwingungssensors 51 als auch außerhalb des Schwingungssensors 52 etablierten - dritten magnetischen Fluß Φ3, nämlich einem magnetischen Fluß durch den Magnetfelddetektor 61 und/oder von einer Flächendichte B3 nämlichen magnetischen Flusses Φ3 abhängige Amplitude U3 aufweist, derart, daß das Magnetfeldsignal $\phi1$ auf zumindest eine Änderung des magnetischen Flusses Φ3 und/oder dessen Flächendichte B3 mit einer Änderung der Amplitude U3 folgt. Der Magnetfelddetektor 61 kann beispielsweise mittels wenigstens eines an Hall-Sensors und/oder mittels wenigstens eines Reedschalter und/oder - wie auch in Fig. 5a, 5b, 6a und 6b jeweils angedeutet - mittels einer Luftspule gebildet sein. Beim erfindungsgemäßen Meßsystem ist zudem die die Umformerschaltung US auch dafür eingerichtet, anhand des Magnetfeldsignals $\phi1$ zumindest qualitativ zu ermitteln, ob innerhalb des Meßwandlers - zusätzlich zum vorbezeichneten internen Magnetfeld H0 - auch das vorbezeichnete externe Magnetfeld H1 etabliert ist, beispielsweise nämlich zu ermitteln, ob eine, insb. eine Funktionstüchtigkeit der Sensoranordnung vermindernde und/oder eine Fehlfunktion der Sensoranordnung bewirkende und/oder eine Integrität zumindest eines der ersten und zweiten Schwingungsmeßsignale bzw. der Massenstrom-Meßwerte herabsetzende, Störung des Meßwandlers durch nämliches externes Magnetfeld H1 vorliegt. Dementsprechend kann das Magnetfeldsignal $\phi1$ beispielsweise ein das vorbezeichnete Magnetfeld H0 + H1 bzw. die Veränderungen des internen Magnetfelds H0 lediglich qualitativ bewertendes bzw. lediglich in begrenztem Umfang diskrete Werte annehmendes Signal, beispielsweise nämlich auch ein nominell lediglich zwei Zustände aufweisendes binäres Schaltsignal, sein. Das Magnetfeldsignal $\phi1$ kann aber beispielsweise auch ein das Magnetfeld H0 + H1 bzw. dessen Änderungen wert- und zeitkontinuierlich quantifizierendendes Analogsignal sein, beispielsweise nämlich eine analoges elektrisches Signal mit einer vom magnetischen Fluß Φ3 und/oder von dessen Flächendichte B3 abhängigen Spannung.

Nicht zuletzt für den vorbeschriebenen Fall, daß der Magnetfelddetektor 61 mittels wenigstens einer Luftspule gebildet ist, kann der Magnetfelddetektor 61 vorteilhaft am wenigstens einen Vibrationselement fixiert sein, derart, daß auch der Magnetfelddetektor 61 eingerichtet ist, den Schwingungsbewegungen des Vibrationselements 10, beispielsweise nämlich denen der Nutz-Schwingungen, zu folgen und eine als Magnetfeldsignal $\phi1$ dienliche Induktionsspannung ($u_{i3}$) zu generieren, die entsprechend dem Induktionsgesetzt (für Bewegungsinduktion):

$$u_{i3} = \frac{d\Psi3}{dt} \sim \Psi3 \cdot 2\pi \cdot f_N \cdot \cos(2\pi \cdot f_N \cdot t) \sim N3 \cdot \Phi3 \cdot 2\pi \cdot f_N \cdot \cos(2\pi \cdot f_N \cdot t) \rightarrow \varphi1$$

von einem entsprechenden Verkettungs- bzw. Induktionsfluß ($\Psi3 = N3 \cdot \Phi3$), nämlich einem gesamtem magnetischen Fluß innerhalb der Luftspule, mithin vom magnetischen Fluß Φ3 und einer zugehörigen Windungszahl (N3) abhängig ist.

Der Magnetfelddetektor 61 kann beispielsweise innerhalb des Elektronik-Gehäuse 100 untergebracht sein; alternativ kann der Magnetfelddetektor 61 aber auch - wie auch in Fig. 2 schematisch dargestellt - innerhalb des Aufnehmer-Gehäuses 100 untergebracht, beispielsweise nämlich auch direkt am Aufnehmer-Gehäuse fixiert sein. Nach einer weiteren Ausgestaltung der Erfindung ist dementsprechend ferner vorgesehen, daß der Magnetfelddetektor 61 in der Nähe des Schwingungssensors 51, beispielsweise auch weniger als 5 cm entfernt, positioniert und/oder - wie auch in Fig. 5a, 5b, 6a und 6b schematisch jeweils dargestellt bzw. aus deren Zusammenschau ohne weiteres ersichtlich - direkt am Schwingungssensor 51 angebracht ist. Für den vorbeschriebenen Fall, daß der Schwingungssensor 51 mittels einer Tauchspule gebildet ist, kann der Magnetfelddetektor 61 - wie auch aus Fig. 5a und 5b bzw. 6a und 6b ohne weiteres ersichtlich - vorteilhaft auch an dem entsprechenden Permanentmagneten 51A des Schwingungssensors 51 oder auch an dessen Luftspule 51B angebracht sein; dies nicht zuletzt auch für den Fall, daß der Magnetfelddetektor 61 ebenfalls mittels einer Luftspule gebildet ist, beispielsweise auch derart, daß die Luftspule des Magnetfelddetektors 61 koaxial zur Luftspule 51B bzw. zum Permanentmagneten 51A des Schwingungssensors 51 ausgerichtet ist.

Nicht zuletzt für den vorbeschriebenen Fall, daß das Magnetfeldsignal φ1 als ein Analogsignal ausgebildet ist, ist die Umformerschaltung nach einer weiteren Ausgestaltung der Erfindung ferner auch dafür eingerichtet, anhand des wenigstens einen Magnetfeldsignals zumindest gelegentlich auch einen oder mehrere Kennzahlenwerte für wenigstens eine - beispielsweise nämlich eine Beeinflussung der Sensoranordnung durch das externe Magnetfeld und/oder eine Beeinflussung zumindest eines der magnetischen Flüsse Φ1, Φ2 charakterisierende - Magnetfeld-Kennzahl MK1 zu berechnen, derart, daß nämliche Magnetfeld-Kennzahl MK1; dies insb. derart, daß nämliche Magnetfeld-Kennzahl MK1 von einer Abweichung des magnetischen Flusses Φ1 vom magnetischen Fluß Φ2 abhängig ist und/oder nämliche Abweichung bewertet und/oder quantifiziert; alternativ nämliche Magnetfeld-Kennzahl MK1 auch so gewählt bzw. können so berechnet werden, daß die Magnetfeld-Kennzahl MK1 von einer Abweichung des magnetischen Flusses Φ3 von einem vorab ermittelten Bezugswert und damit indirekt auch von einer Abweichung zumindest des magnetischen Flusses Φ1 vom Bezugswert abhängig ist und/oder nämliche Abweichung bewertet und/oder quantifiziert, für die Sensoren-Kennzahl MK1 beispielsweise also gilt:

$$\mathrm{MK1} = \mathrm{f}(\mathrm{U3}) = \mathrm{f}(\Phi 3(\Phi 1)) = \mathrm{f}(\mathrm{H0}, \mathrm{H1}) \hspace{3cm} (1)$$

Die Magnetfeld-Kennzahl MK1 kann im Betrieb des Coriolis-Massendurchfluß-Meßgeräts wiederkehrend mittels der Umformerschaltung US ermittelt werden, beispielsweise anhand von für die Amplitude U3 des Magnetfeldsignals φ1 ermittelte digitale Amplitudenwerte. Für den erwähnten Fall, daß in der Umformerschaltung US wenigstens ein nicht flüchtiger elektronischer Datenspeicher EEPROM vorgesehen ist kann die Umformerschaltung US zudem dafür eingerichtet sein, eingerichtet sein, einen oder mehrere der vorbezeichneten digitalen Amplitudenwerte für die Amplitude U3 in nämlichem Datenspeicher EEPROM zu speichern, beispielsweise auch jeweils zusammen mit einem Zahlenwert für eine einen jeweiligen Zeitpunkt des Ermittelns des jeweiligen Kennzahlenwerts entsprechenden Zeitvariable (Zeitstempel).

Zum Detektieren des Vorliegens eines die Funktionstüchtigkeit der Sensoranordnung, mithin die Meßgenauigkeit des Coriolis-Massendurchfluß-Meßgeräts beeinträchtigenden externen Magnetfeldes ist die Umformerschaltung US gemäß einer weiteren Ausgestaltung der Erfindung ferner eingerichtet, einen oder mehrere Kennzahlenwerte für die wenigstens eine Magnetfeld-Kennzahl MK1 auszuwerten, beispielsweise nämlich jeweils mit einem oder mehreren für die nämliche Magnetfeld-Kennzahl MK1 vorab ermittelten, beispielsweise nämlich in vorbezeichnetem nicht flüchtigen elektronischen Datenspeicher EEPROM gespeicherten, Bezugswerten $BK1_1$ ($BK1_1$, $BK1_2$,...$BK1_i$...) zu vergleichen. Dementsprechend ist die Umformerschaltung US ferner auch dafür eingerichtet, zu ermitteln, ob ein oder mehrere Kennzahlenwerte für die Magnetfeld-Kennzahl MK1 größer als einer oder mehrere solcher, beispielsweise nämlich ein nicht mehr intaktes Coriolis-Massendurchfluß-Meßgerät repräsentierende, Bezugswerte für die Magnetfeld-Kennzahl MK1 ist und ggf. beispielsweise auch eine dies signalisierende (Störungs-)Meldung auszugeben, beispielsweise nämlich vor Ort anzuzeigen und/oder als Statusmeldung an das vorbezeichnete elektronischen Datenverarbeitungssystem zu übermitteln. Bei den vorbezeichneten Bezugswerten für die Magnetfeld-Kennzahl MK1 kann es sich beispielsweise um eine (auf ein externes Magnetfeld zurückzuführende) verminderte Funktionstüchtigkeit der Sensoranordnung bzw. eine (auf ein externes Magnetfeld zurückzuführende) Fehlfunktion der Sensoranordnung repräsentierende Bezugswerte handeln. Nämliche Bezugswerte können beispielsweise vorab, beispielsweise nämlich vom Hersteller des Coriolis-Massendurchfluß-Meßgeräts bzw. bei einer während der Herstellung des Coriolis-Massendurchfluß-Meßgeräts vollzogenen (Werks-)Kalibrierung und/oder während der Inbetriebnahme vor Ort, und/oder im Betrieb des Coriolis-Massendurchfluß-Meßgeräts ermittelt werden; dies beispielsweise, derart, daß zunächst die jeweilige Magnetfeld-Kennzahl MK1 für das fertiggestellte, mithin intakte Coriolis-Massendurchfluß-Meßgerät ermittelt und mit einem einer noch tolerierbaren Beeinflussung entsprechenden Toleranzwert entsprechend in den Bezugswert $BK1_1$ umgerechnet wird und/oder indem die Magnetfeld-Kennzahl MK1 mittels des in der Nähe eines ein Referenz-Magnetfeld bewirkenden Magneten positionierten, ansonsten aber intakten Coriolis-Massendurchfluß-Meßgeräts direkt ermittelt und als Bezugswert $BK1_1$ im Datenspeicher EEPROM abgespeichert wird.

Die Ermittlung der Kennzahlenwerte MK1 bzw. das Ermitteln des Vorliegens eines externen Magnetfeldes kann beispielsweise automatisiert, beispielsweise nämlich zeitgesteuert und/oder auch in Abhängigkeit von Änderungen von anderen Diagnosewerten, initiiert bzw. wieder ausgesetzt werden. Alternativ oder in Ergänzung kann die Ermittlung der Kennzahlenwerte aber auch von extern des Coriolis-Massendurchfluß-Meßgeräts initiiert und/oder ausgesetzt werden, beispielsweise nämlich ausgehend von vorbezeichnetem elektronischen Datenverarbeitungssystem über die vorbezeichnete Sende- und Empfangselektronik COM und/oder ausgehend von Bedienpersonal vor Ort über die vorbezeichnete Anzeige- und Bedienelement HMI. Dementsprechend ist die Umformerschaltung nach einer weiteren eingerichtet ist, einen zumindest die Ermittlung der Kennzahlenwerte für zumindest die Magnetfeld-Kennzahl MK1, ggf. nämlich auch deren vorbezeichnete Auswertung initiierenden Start-Befehl zu empfangen und auszuwerten, nämlich einen Eingang des Start-Befehls zu detektieren und daraufhin eine Ermittlung der Kennzahlenwerte für die erste Magnetfeld-Kennzahl MK1 in Gang zu setzen und/oder ist die Umformerschaltung eingerichtet, einen die Ermittlung der Kennzahlenwerte für die Magnetfeld-Kennzahl MK1 zumindest vorübergehend unterbindenden Stop-Befehl zu empfangen und auszuwerten, nämlich einen Eingang des Stop-Befehls zu detektieren und daraufhin eine Ermittlung der Kennzahlenwerte für die erste Magnetfeld-Kennzahl MK1 zumindest vorübergehend anzuhalten.

Um die Genauigkeit bzw. Verläßlichkeit mit der die Anwesenheit des externe Magnetfeldes festegestellt werden kann weiter zu erhöhen ist nach einer weiteren Ausgestaltung der Erfindung vorgesehen, daß die Sensoranordnung zum Erfassen des Magnetfeldes - wie auch in Fig. 2. bzw. 7a und 7b jeweils angedeutet bzw. auch aus deren Zusammenschau ohne weiteres ersichtlich - wenigstens einen, beispielsweise auch zum Magnetfelddetektor 61 baugleichen, zweiten Magnetfelddetektor 62 aufweist, der eingerichtet ist, Änderungen des Magnetfeldes H0 bzw. H0+H1 an einem vom vorbezeichneten dritten Meßpunkt entfernten, beispielsweise nämlich auch vom ersten Meßpunkt und/oder vom zweiten Meßpunkten entfernten, vierten Meßpunkt in ein, insb. nämliche Änderungen des Magnetfeldes bewertendes und/oder die Änderungen quantifizierendendes und/oder elektrisches, zweites Magnetfeldsignal $\phi2$ der Sensoranordnung zu wandeln, das eine von einem vierten magnetischen Fluß $\Phi4$, nämlich einem magnetischen Fluß durch den Magnetfelddetektor 62 und/oder von einer Flächendichte B4 nämlichen magnetischen Flusses $\Phi4$ abhängige Amplitude U4 aufweist, derart, daß das Magnetfeldsignal $\phi2$ auf zumindest eine Änderung des vierten magnetischen Flusses $\Phi4$ und/oder dessen Flächendichte B4 mit einer Änderung der Amplitude U4 folgt. Ferner ist die Umformerschaltung zudem eingerichtet, auch das Magnetfeldsignal $\phi2$ zu empfangen und auszuwerten, nämlich anhand auch des Magnetfeldsignals $\phi2$ zu ermitteln, ob das externe Magnetfeld H1 vorliegt. Der Magnetfelddetektor 62 kann beispielsweise am Schwingungssensor 52 angebracht oder in dessen Nähe, insb. nämlich weniger als 5 cm entfernt, positioniert sein. Alternativ oder in Ergänzung kann das Magnetfeldsignal $\phi2$ auch als ein Analogsignal ausgebdildet sein, beispielsweise mit einer vom magnetischen Fluß $\Phi4$ und/oder von dessen Flächendichte B4 abhängigen Spannung.

## Patentansprüche

1.   Coriolis-Massendurchfluß-Meßgerät, insb. Coriolis-Massendurchfluß-/Dichte-Meßgerät, zum Messen eines Massenstroms eines fluiden Meßstoff - insb. eines Gases, einer Flüssigkeit oder einer Dispersion -, welches Coriolis-Massendurchfluß-Meßgerät umfaßt:

- einen Meßwandler (MW), der wenigstens ein Vibrationselement (10), eine Erregeranordnung sowie eine Sensoranordnung aufweist und der eingerichtet ist, den Meßstoff zu führen, nämlich zumindest zeitweise vom Meßstoff durchströmt zu werden;
- sowie eine mit dem Meßwandler, nämlich sowohl mit dessen Erregeranordnung als auch dessen Sensoranordnung elektrisch gekoppelte, insb. mittels wenigstens eines Mikroprozessors gebildete, elektronische Umformerschaltung (US);
- wobei das wenigstens eine Vibrationselement eingerichtet ist, vom strömenden Meßstoff kontaktiert und währenddessen vibrieren gelassen zu werden;
- wobei die Erregeranordnung eingerichtet ist, dorthin eingespeiste elektrische Leistung in erzwungene mechanische Schwingungen des Vibrationselements bewirkende mechanische Leistung zu wandeln;
- wobei die Umformerschaltung eingerichtet ist, ein elektrisches Treibersignal (e1) zu generieren und damit elektrische Leistung in die Erregeranordnung einzuspeisen, derart, daß das Vibrationselement zumindest anteilig Nutzschwingungen, nämlich erzwungene mechanische Schwingungen mit wenigstens einer Nutzfrequenz, nämlich einer durch das elektrische Treibersignal vorgegebenen, insb. einer Resonanzfrequenz des Meßwandlers entsprechenden, Schwingungsfrequenz ausführt, die geeignet sind, im strömendem Meßstoff vom Massenstrom abhängige Corioliskräfte zu bewirken;
- wobei die Sensoranordnung zum Erfassen mechanischer Schwingungen des wenigstens einen Vibrationselements, insb. dessen Nutzschwingungen, einen elektrodynamischen ersten Schwingungssensor (51) und wenigstens einen, insb. zum ersten Schwingungssensor (51) baugleichen, elektrodynamischen zweiten Schwingungssensor (52) aufweist,

-- wobei der erste Schwingungssensor (51) eingerichtet ist, Schwingungsbewegungen des wenigstens einen Vibrationselements an einem ersten Meßpunkt in ein elektrisches erstes Schwingungsmeßsignal der Sensoranordnung zu wandeln, derart, daß nämliches erstes Schwingungsmeßsignal
-- wenigstens eine erste Nutzkomponente ($s1_{N1}$), nämlich eine Wechselspannungskomponente

--- mit einer der Nutzfrequenz entsprechenden Frequenz,

--- und mit einer von der Nutzfrequenz und einem ersten magnetischen Fluß ($\Phi$1), nämlich einem magnetischen Fluß durch den ersten Schwingungssensor (51) abhängigen Amplitude ($U1_N$) aufweist;

-- und wobei der zweite Schwingungssensor (52) eingerichtet ist, Schwingungsbewegungen des wenigstens einen Vibrationselements an einem vom ersten Meßpunkt entfernten zweiten Meßpunkt in ein elektrisches zweites Schwingungsmeßsignal der Sensoranordnung zu wandeln, derart, daß nämliches zweites Schwingungsmeßsignal

-- wenigstens eine zweite Nutzkomponente ($s2_{N1}$), nämlich eine Wechselspannungskomponente

--- mit einer der Nutzfrequenz entsprechenden Frequenz,

--- und mit einer von der Nutzfrequenz und einem zweiten magnetischen Fluß ($\Phi$2), nämlich einem magnetischen Fluß durch den zweiten Schwingungssensor (52) abhängigen Amplitude aufweist;

- und wobei die Sensoranordnung zum Erfassen eines zumindest anteilig auch außerhalb der ersten und zweiten Schwingungssensoren etablierten Magnetfeldes (H0; H0+H1) wenigstens einen, insb. mittels eines Hall-Sensors und/oder eines Reedschalters gebildeten, ersten Magnetfelddetektor (61) aufweist, der eingerichtet ist, Änderungen des Magnetfeldes (H0; H0+H1) an einem sowohl vom ersten Meßpunkt als auch vom zweiten Meßpunkt entfernten dritten Meßpunkt in ein, insb. nämliche Änderungen bewertendes und/oder die Änderungen quantifizierendendes und/oder elektrisches, erstes Magnetfeldsignal ($\phi$1) der Sensoranordnung zu wandeln, das eine von einem dritten magnetischen Fluß ($\Phi$3), nämlich einem magnetischen Fluß durch den ersten Magnetfelddetektor und/oder von einer Flächendichte (B3) nämlichen magnetischen Flusses ($\Phi$3) abhängige Amplitude (U3) aufweist, derart, daß das erste Magnetfeldsignal auf zumindest eine Änderung des dritten magnetischen Flusses ($\Phi$3) und/oder dessen Flächendichte (B3) mit einer Änderung der Amplitude (U3) folgt;
- und wobei die Umformerschaltung eingerichtet ist, sowohl die ersten und zweiten Schwingungsmeßsignale als auch das erste Magnetfeldsignal ($\phi$1) zu empfangen und auszuwerten, nämlich

-- anhand der ersten und zweiten Schwingungsmeßsignale den Massenstrom repräsentierende, insb. digitale, Massenstrom-Meßwerte zu ermitteln

-- sowie anhand des ersten Magnetfeldsignals zumindest qualitativ zu ermitteln, ob innerhalb des Meßwandlers ein externes, insb. durch ein außerhalb des Coriolis-Massendurchfluß-Meßgeräts erzeugtes elektrisches Feld und/oder durch einen außerhalb des Coriolis-Massendurchfluß-Meßgeräts positionierten Magneten verursachtes, Magnetfeld (H1) etabliert ist, insb. nämlich zu ermitteln, ob eine, insb. eine Funktionstüchtigkeit der Sensoranordnung vermindernde und/oder eine Fehlfunktion der Sensoranordnung bewirkende und/oder eine Integrität zumindest eines der ersten und zweiten Schwingungsmeßsignale bzw. der Massenstrom-Meßwerte herabsetzende, Störung des Meßwandlers durch nämliches externes Magnetfeld (H1) vorliegt.

2. Coriolis-Massendurchfluß-Meßgerät nach Anspruch 1, wobei das erste Magnetfeldsignal ($\phi$1) ein, insb. werte- und zeitkontinuierliches, Analogsignal ist, insb. mit einer vom dritten magnetischen Fluß und/oder von dessen Flächendichte (B3) abhängigen Spannung.

3. Coriolis-Massendurchfluß-Meßgerät nach dem vorherigen Anspruch, wobei die Umformerschaltung eingerichtet ist, anhand des ersten Magnetfeldsignals Kennzahlenwerte für wenigstens eine, insb. eine Beeinflussung der Sensoranordnung durch das externe Magnetfeld und/oder eine Beeinflussung zumindest eines der ersten und zweiten magnetischen Flüsse charakterisierende, Magnetfeld-Kennzahl (MK1) zu berechnen, insb. derart, daß nämliche Magnetfeld-Kennzahl von einer Abweichung des ersten magnetischen Flusses vom zweiten magnetischen Fluß abhängig ist und/oder nämliche Abweichung bewertet und/oder quantifiziert oder daß nämliche Magnetfeld-Kennzahl von einer Abweichung des ersten magnetischen Flusses von einem vorab ermittelten Bezugswert abhängig ist und/oder nämliche Abweichung bewertet und/oder quantifiziert.

4. Coriolis-Massendurchfluß-Meßgerät nach dem vorherigen Anspruch, wobei die Umformerschaltung eingerichtet ist, einen oder mehrere Kennzahlenwerte für die Magnetfeld-Kennzahl jeweils mit einem oder mehreren für die Magnetfeld-Kennzahl, insb. vom Hersteller des Coriolis-Massendurchfluß-Meßgeräts und/oder bei der Herstellung des Coriolis-Massendurchfluß-Meßgerät, ermittelten Bezugswerten, insb. einem oder mehreren eine verminderte Funktionstüchtigkeit der Sensoranordnung repräsentierenden Bezugswerten und/oder einem oder mehreren eine Fehlfunktion der Sensoranordnung repräsentierenden Bezugswerten und/oder einem oder mehreren ein nicht mehr intaktes Coriolis-Massendurchfluß-Meßgerät repräsentierenden Bezugswerten, zu vergleichen.

5. Coriolis-Massendurchfluß-Meßgerät nach dem vorherigen Anspruch, wobei die Umformerschaltung eingerichtet ist, zu ermitteln, ob eine oder mehrere Kennzahlenwerte für die Magnetfeld-Kennzahl (MK1) größer als der wenigstens eine Bezugswert für die Magnetfeld-Kennzahl ist, insb. nämlich falls ein oder mehrere Kennzahlenwerte für die Magnetfeld-Kennzahl größer als ein oder mehrere eine verminderte Funktionstüchtigkeit der Sensoranordnung repräsentierende Bezugswerte und/oder größer als ein oder mehrere eine Fehlfunktion der Sensoranordnung repräsentierende Bezugswerte ist und/oder größer als ein oder mehrere ein nicht mehr intaktes Coriolis-Massendurchfluß-Meßgerät repräsentierenden Bezugswerten ist, eine dies signalisierende Meldung auszugeben.

6. Coriolis-Massendurchfluß-Meßgerät nach einem der vorherigen Ansprüche, wobei die Umformerschaltung einen nicht-flüchtigen elektronischen Datenspeicher (EEPROM) aufweist, der dafür eingerichtet ist, digitale Daten, insb. auch ohne eine angelegte Betriebsspannung, vorzuhalten, insb. nämlich einen oder mehrere vorab ermittelte Bezugswerte für die Magnetfeld-Kennzahl zu speichern.

7. Coriolis-Massendurchfluß-Meßgerät nach Anspruch 3 und 6, wobei im elektronischen Datenspeicher ein oder mehrere, insb. vom Hersteller des Coriolis-Massendurchfluß-Meßgeräts und/oder bei der Herstellung des Coriolis-Massendurchfluß-Meßgeräts und/oder im Betrieb des Coriolis-Massendurchfluß-Meßgeräts vorab ermittelte, Bezugswerte für die Magnetfeld-Kennzahl, insb. nämlich ein oder mehrere eine verminderte Funktiontüchtigkeit der Sensoranordnung repräsentierende Bezugswerte und/oder nämlich ein oder mehrere eine Fehlfunktion der Sensoranordnung repräsentierende Bezugswerte, gespeichert sind.

8. Coriolis-Massendurchfluß-Meßgerät nach dem vorherigen Anspruch, wobei die Umformerschaltung eingerichtet ist, einen oder mehrere Kennzahlenwerte für die Magnetfeld-Kennzahl jeweils mit einem oder mehreren im Datenspeicher gespeicherten Bezugswerten für die Magnetfeld-Kennzahl zu vergleichen.

9. Coriolis-Massendurchfluß-Meßgerät nach einem der vorherigen Ansprüche, wobei der erste Magnetfeldetektor am ersten Schwingungssensor (51) angebracht oder in dessen Nähe, insb. nämlich weniger als 5 cm entfernt, positioniert, insb. nämlich am wenigstens einen Vibrationselement fixiert, ist.

10. Coriolis-Massendurchfluß-Meßgerät nach einem der vorherigen Ansprüche, weiters umfassend:
ein Aufnehmer-Gehäuse (100), wobei das wenigstens eine Vibrationselement (10), die Erregeranordnung sowie zumindest teilweise die Sensoranordnung innerhalb des Aufnehmer-Gehäuses (100) untergebracht sind, insb. derart, daß das wenigstens eine Vibrationselement (10) am Aufnehmer-Gehäuse (100) fixiert ist und/oder daß der erste Magnetfelddetektor innerhalb des Aufnehmer-Gehäuses (100) untergebracht und daran fixiert ist.

11. Coriolis-Massendurchfluß-Meßgerät nach einem der vorherigen Ansprüche, weiters umfassend:
ein Elektronik-Gehäuse (200), wobei die Umformerschaltung, insb. nämlich sowohl die Umformerschaltung als auch der erste Magnetfelddetektor innerhalb des Elektronik-Gehäuses (100) untergebracht, ist.

12. Coriolis-Massendurchfluß-Meßgerät nach einem der vorherigen Ansprüche,

 - wobei der erste Schwingungssensor mittels einer ersten Tauchspule und der zweite Schwingungssensor mittels einer zweiten Tauchspule gebildet ist; und/oder
 - wobei der erste Magnetfelddetektor mittels wenigstens einer am wenigstens einen Vibrationselement fixierten Luftspule gebildet ist; und/oder
 - wobei der erste Magnetfelddetektor mittels wenigstens eines Hall-Sensors gebildet ist; und/oder
 - wobei der erste Magnetfelddetektor mittels wenigstens eines Reedschalters gebildet ist.

13. Coriolis-Massendurchfluß-Meßgerät nach einem der vorherigen Ansprüche,

 - wobei der erste Schwingungssensor einen, insb. unter Bildung des ersten Meßpunkts mechanisch mit dem wenigstens einen Vibrationselement verbundenen, ersten Permanentmagneten sowie eine erste Luftspule aufweist,

 -- wobei der erste Permanentmagnet einen den ersten Magnetischer Fluß (B1) führenden ersten Luftspalt bildet und die erste Luftspule zumindest teilweise innerhalb nämlichen ersten Luftspalts positioniert ist,
 -- und wobei der erste Permanentmagnet und die erste Luftspule eingerichtet sind, durch Schwingungsbewegungen des wenigstens einen Vibrationselements relativ zueinander bewegt zu werden und eine als erstes Schwingungsmeßsignal dienliche erste Induktionsspannung zu generieren; und

- wobei der zweite Schwingungssensor einen, insb. unter Bildung des zweiten Meßpunkts mechanisch mit dem wenigstens einen Vibrationselement verbundenen, zweiten Permanentmagneten sowie eine zweite Luftspule aufweist,

-- wobei der zweite Permanentmagnet einen den zweiten Magnetischer Fluß (B2) führenden zweiten Luftspalt bildet und die zweite Luftspule zumindest teilweise innerhalb nämlichen zweiten Luftspalts positioniert ist,

-- und wobei der zweite Permanentmagnet und die zweite Luftspule eingerichtet sind, durch Schwingungsbewegungen des wenigstens einen Vibrationselements relativ zueinander bewegt zu werden und eine als zweites Schwingungsmeßsignal dienliche zweite Induktionsspannung zu generieren.

14. Coriolis-Massendurchfluß-Meßgerät nach einem der vorherigen Ansprüche,

- wobei die Sensoranordnung zum Erfassen des Magnetfeldes (H) wenigstens einen, insb. zum ersten Magnetfelddetektor baugleichen und/oder am zweiten Schwingungssensor (52) oder in dessen Nähe angebrachten, zweiten Magnetfelddetektor (62) aufweist, der eingerichtet ist, Änderungen des Magnetfeldes an einem vom dritten Meßpunkt entfernten, insb. auch vom ersten Meßpunkt und/oder vom zweiten Meßpunkten entfernten, vierten Meßpunkt in ein, insb. nämliche Änderungen bewertendes und/oder die Änderungen quantifizierendes und/oder elektrisches, zweites Magnetfeldsignal ($\phi$2) der Sensoranordnung zu wandeln, das eine von einem vierten magnetischen Fluß ($\Phi$4), nämlich einem magnetischen Fluß durch den zweiten Magnetfelddetektor und/oder von einer Flächendichte (B4) nämlichen magnetischen Flusses ($\Phi$4) abhängige Amplitude (U4) aufweist, derart, daß das zweite Magnetfeldsignal ($\phi$2) auf zumindest eine Änderung des vierten magnetischen Flusses ($\Phi$4) und/oder dessen Flächendichte (B4) mit einer Änderung der Amplitude (U4) folgt;

- und wobei die Umformerschaltung eingerichtet ist, auch das zweite Magnetfeldsignal ($\phi$2) zu empfangen und auszuwerten, nämlich anhand auch des zweiten Magnetfeldsignals zu ermitteln, ob das externe Magnetfeld (H1) vorliegt.

15. Coriolis-Massendurchfluß-Meßgerät nach einem der vorherigen Ansprüche,

- wobei jede der ersten und zweiten Nutzkomponenten jeweils einen vom Massenstrom abhängigen Phasenwinkel aufweist und wobei die Umformerschaltung eingerichtet ist, die Massenstrom-Meßwerte anhand einer Phasendifferenz zwischen den ersten und zweiten Nutzkomponenten, nämlich einer Differenz zwischen dem Phasenwinkel der ersten Nutzkomponente und dem Phasenwinkel der zweiten Nutzkomponente zu berechnen; und/oder

- wobei die Erregeranordnung zum Anregen von Schwingungen des wenigstens eine Meßrohrs einen, insb. elektrodynamischen und/oder einzigen, Schwingungserreger (41) aufweist; und/oder

- wobei das wenigstens eine Vibrationselement mittels wenigstens eines, insb. zumindest abschnittsweise geraden und/oder zumindest abschnittsweise kreisbogenförmigen, Rohrs mit einem von einer, insb. metallischen, Rohrwand und einem davon umhüllten Lumen gebildet und dafür eingerichtet ist, von Meßstoff durchströmt und währenddessen vibrieren gelassen zu werden.

## Claims

1. A Coriolis mass flow meter, in particular a Coriolis mass flow/density meter, for measuring a mass flow of a fluid medium - in particular a gas, a liquid or a dispersion - said Coriolis mass flow meter comprising:

- A transducer (MW), which has at least one vibrating element (10), an exciter assembly and a sensor assembly, and which is configured to conduct the medium, namely to have the medium flow through it at least occasionally;

- And an electronic converter circuit (US) which is electrically coupled with the transducer, namely electrically coupled with both its exciter assembly and its sensor assembly, and which is in particular formed by at least one microprocessor;

- wherein the at least one vibrating element is configured to be contacted by the flowing medium, causing it to vibrate in the process;

- wherein the exciter assembly is configured to convert the electrical energy fed to it into mechanical power, which causes mechanical vibrations of the vibrating element;

- wherein the converter circuit is configured to generate an electrical driver signal (e1) and therefore to feed electrical power to the exciter assembly in such a way that the vibrating element carries out useful vibrations at least proportionally, namely forced mechanical vibrations at at least one useful frequency, namely at a vibration frequency prespecified by the electrical driver signal, in particular at a resonance frequency of the transducer, which are suitable for effecting Coriolis forces dependent on the mass flow in the flowing medium;

- wherein the sensor assembly for recording mechanical vibrations of the at least one vibrating element, in particular its useful vibrations, has an electrodynamic first vibration sensor (51) and at least one electrodynamic second vibration sensor (52), in particular one with an identical design to that of the first vibration sensor (51),

- wherein the first vibration sensor (51) is configured to convert vibrating movements of the at least one vibrating element at a first measuring point into a first electrical vibration measuring signal of the sensor assembly in such a way that said first vibration measuring signal

- has at least a first useful component ($s1_{N1}$), namely an alternating voltage component
- with a frequency corresponding to the useful frequency,
- and with an amplitude ($U1_N$) which depends on the useful frequency and a first magnetic flux ($\Phi1$), namely a magnetic flux through the first vibration sensor (51);

- and wherein the second vibration sensor (52) is configured to convert vibrating movements of the at least one vibrating element at a second measuring point positioned away from the first measuring point into an electrical second vibration measuring signal of the sensor assembly in such a way that said second vibration measuring signal

- has at least a second useful component ($s2_{N1}$), namely an alternating voltage component
- with a frequency corresponding to the useful frequency,
- and with an amplitude which depends on the useful frequency and a second magnetic flux ($\Phi2$), namely a magnetic flux through the second vibration sensor (52);

- and wherein the sensor assembly for recording a magnetic field (H0; H0+H1) established at least proportionally also outside the first and second vibration sensors has at least a first magnetic field detector (61), in particular one formed by a Hall sensor and/or a Reed switch, said magnetic field detector being configured to convert changes to the magnetic field (H0; H0+H1) at a third measuring point positioned away from the first measuring point and the second measuring point into a first magnetic field signal ($\phi1$) of the sensor assembly, in particular a signal which evaluates and/or quantifies said changes and/or which is electrical, said first magnetic field signal having an amplitude (U3) which depends on a third magnetic flux ($\Phi3$), namely a magnetic flux through the first magnetic field detector and/or on a surface density (B3) of said magnetic flux ($\Phi3$) in such a way that the first magnetic field signal follows at least one change to the third magnetic flux ($\Phi3$) and/or its surface density (B3) with a change to the amplitude (U3);

- and wherein the converter circuit is configured to receive and evaluate both the first and second vibration measuring signals as well as the first magnetic field signal ($\phi1$), namely

- to determine, using the first and second vibration measuring signals, mass flow measured values, in particular digital ones, which represent the mass flow,

- and to at least qualitatively determine, using the first magnetic field signal, whether an external magnetic field (H1) has been established inside the transducer, in particular one caused by an electrical field generated outside the Coriolis mass flow meter and/or by a magnet positioned outside the Coriolis mass flow meter, in particular namely to determine whether there is a transducer malfunction due to said external magnetic field (H1), in particular one which impairs the functionality of the sensor assembly and/or causes a sensor assembly malfunction and/or reduces the integrity of at least one of the first and second vibration measuring signals or mass flow measured values.

2. The Coriolis mass flow meter as claimed in claim 1, wherein the first magnetic field signal ($\phi1$) is an analog signal, in particular a continuous-value and continuous-time analog signal, in particular one which has a voltage dependent on the third magnet flux and/or its surface density (B3).

3. The Coriolis mass flow meter as claimed in the preceding claim, wherein the converter circuit is configured to calculate key values for at least one magnetic field figure (MK1) using the first magnetic field signal, in particular a magnetic field figure which characterizes an impact on the sensor assembly due the external magnetic field and/or an impact on at least one of the first and second magnetic fluxes, in particular in such a way that said magnetic field figure is dependent on a deviation of the first magnetic flux from the second magnetic flux and/or evaluates and/or quantifies said deviation, or in such a way that said magnetic field figure is dependent on a deviation of the first magnetic flux from a reference value determined in advance and/or evaluates and/or quantifies said deviation.

4. The Coriolis mass flow meter as claimed in the preceding claim, wherein the converter circuit is configured to compare one or more key values for the magnetic field figure with one or more reference values for the magnetic field figure, in particular reference values which have been determined in advance by the manufacturer of the Coriolis mass flow meter and/or during manufacture of the Coriolis mass flow meter, in particular one or more reference values indicative of impaired functionality of the sensor assembly and/or one or more reference values indicative of a sensor assembly malfunction and/or one or more reference values indicative of a Coriolis mass flow meter that is no longer intact.

5. The Coriolis mass flow meter as claimed in the preceding claim, wherein the converter circuit is configured to determine whether one or more key values for the magnetic field figure (MK1) are greater than the at least one reference value for the magnetic field figure, in particular namely to provide notification if one or more key values for the magnetic field figure are greater than one or more reference values indicative of impaired functionality of the sensor assembly and/or greater than one or more reference values indicative of a sensor assembly malfunction and/or greater than one or more reference values indicative of a Coriolis mass flow meter that is no longer intact.

6. The Coriolis mass flow meter as claimed in one of the preceding claims, wherein the converter circuit has a non-volatile electronic memory (EEPROM) which is configured for storing digital data, in particular also when no operating voltage is present, in particular to store namely one or more reference values for the magnetic field figure which have been determined in advance.

7. The Coriolis mass flow meter as claimed in claims 3 and 6, wherein reference values for the magnetic field figure, in particular reference values which have been determined in advance by the manufacturer of the Coriolis mass flow meter and/or during manufacture of the Coriolis mass flow meter and/or during operation of the Coriolis mass flow meter are saved in the electronic memory, in particular namely one or more reference values indicative of impaired functionality of the sensor assembly and/or namely one or more reference values indicative of a sensor assembly malfunction.

8. The Coriolis mass flow meter as claimed in the preceding claim, wherein the converter circuit is configured to compare one or more key values for the magnetic field figure with one or more reference values for the magnetic field figure saved in the memory.

9. The Coriolis mass flow meter as claimed in one of the preceding claims, wherein the first magnetic field detector is attached to the first vibration sensor (51) or positioned near it, in particular namely no more than 5 cm away, in particular namely secured to the at least one vibrating element.

10. The Coriolis mass flow meter as claimed in one of the preceding claims, further comprising: A sensor housing (100), wherein the at least one vibrating element (10), the exciter assembly and at least part of the sensor assembly are housed inside the sensor housing (100), in particular in such a way that the at least one vibrating element (10) is secured to the sensor housing (100) and/or that the first magnetic field detector is housed inside the sensor housing (100) and secured to it.

11. The Coriolis mass flow meter as claimed in one of the preceding claims, further comprising: An electronics enclosure (200), wherein the converter circuit, in particular namely both the converter circuit and the first magnetic field detector, is housed inside the electronics enclosure (100).

12. The Coriolis mass flow meter as claimed in one of the preceding claims,

   - wherein the first vibration sensor is formed by a first plunger coil and the second vibration sensor is formed by a second plunger coil; and/or
   - wherein the first magnetic field detector is formed by at least one air coil secured to the at least one vibrating element; and/or
   - wherein the first magnetic field detector is formed by at least one Hall sensor; and/or
   - wherein the first magnetic field detector is formed by at least one Reed switch.

13. The Coriolis mass flow meter as claimed in one of the preceding claims,

   - wherein the first vibration sensor has a first permanent magnet, in particular which is mechanically connected to the at least one vibrating element to form the first measuring point, as well as a first air coil,
   - wherein the first permanent magnet forms a first air gap which conducts the first magnetic flux (B1) and the first air coil is positioned at least partly inside said first air gap,
   - and wherein the first permanent magnet and the first air coil are configured to be moved relative to one another due to vibrating movements of the at least one vibrating element and to generate a first inductive voltage which serves as a first vibration measuring signal; and
- wherein the second vibration sensor has a second permanent magnet, in particular which is mechanically connected to the at least one vibrating element to form the second measuring point, as well as a second air coil,
- wherein the second permanent magnet forms a second air gap which conducts the second magnetic flux (B2) and the second air coil is positioned at least partly inside said second air gap,
and wherein the second permanent magnet and the second air coil are configured to be moved relative to one another due to vibrating movements of the at least one vibrating element and to generate a second inductive voltage which serves as a second vibration measuring signal.

14. The Coriolis mass flow meter as claimed in one of the preceding claims,

- wherein the sensor assembly for recording the magnetic field (H) has at least a second magnetic field detector (62), in particular one which has an identical design to that of the first magnetic field detector and/or which is attached to the second vibration sensor (52) or near it, said second magnetic field detector being configured to convert changes to the magnetic field at a fourth measuring point positioned away from the third measuring point, in particular also positioned away from the first measuring point and/or from the second measuring point, into a second magnetic field signal ($\phi$2) of the sensor assembly, in particular a signal which evaluates and/or quantifies said changes and/or which is electrical, said second magnetic field signal having an amplitude (U4) which depends on a fourth magnetic flux ($\Phi$4), namely a magnetic flux through the second magnetic field detector and/or on a surface density (B4) of said magnetic flux ($\Phi$4) in such a way that the second magnetic field signal ($\phi$2) follows at least one change to the fourth magnetic flux ($\Phi$4) and/or its surface density (B4) with a change to the amplitude (U4);
- and wherein the converter circuit is configured to also receive and evaluate the second magnetic field signal ($\phi$2), namely to determine whether the external magnetic field (H1) is present, also using the second magnetic field signal.

15. The Coriolis mass flow meter as claimed in one of the preceding claims,

- wherein each of the first and second useful components has a phase angle which depends on the mass flow, and wherein the converter circuit is configured to calculate the mass flow measured values using a phase difference between the first and second useful components, namely a difference between the phase angle of the first useful component and the phase angle of the second useful component; and/or
- wherein the exciter assembly for causing the at least one measuring tube to vibrate has a vibration generator (41), in particular one which is electrodynamic and/or which is the sole vibration generator; and/or
- wherein the at least one vibrating element is formed by at least one pipe, in particular one which has at least some straight sections and/or at least some curved sections, with a pipe wall, in particular a metallic pipe wall, and a lumen enclosed by said wall, and is configured for the medium to flow through it, causing said vibrating element to vibrate.

**Revendications**

1. Débitmètre massique Coriolis, notamment un débitmètre/densimètre Coriolis, destiné à la mesure d'un débit massique d'un produit fluide - notamment d'un gaz, d'un liquide ou d'une dispersion -, lequel débitmètre massique Coriolis comprend :

- un transducteur (MW), lequel présente au moins un élément vibrant (10), un dispositif d'excitation ainsi qu'un arrangement de capteurs, et lequel transducteur est conçu pour guider le produit, à savoir pour être traversé au moins temporairement par le produit ;
- ainsi qu'un circuit de transmetteur électronique (US) couplé électriquement au transducteur, à savoir aussi bien à son dispositif d'excitation qu'à son arrangement de capteurs, lequel transducteur est notamment constitué d'au moins un microprocesseur ;
- l'au moins un élément vibrant étant conçu pour être mis en contact avec le produit qui s'écoule et pour être laissé vibrer pendant ce temps ;
- le dispositif d'excitation étant conçu pour convertir la puissance électrique qui lui est fournie en une puissance mécanique provoquant des vibrations mécaniques forcées de l'élément vibrant ;
- le circuit de transmetteur étant conçu pour générer un signal d'attaque électrique (e1) et injecter ainsi de la puissance électrique dans le dispositif d'excitation, de telle sorte que l'élément vibrant exécute au moins en partie des vibrations utiles, à savoir des vibrations mécaniques forcées avec au moins une fréquence utile, à savoir une fréquence de vibration prédéfinie par le signal d'attaque électrique, correspondant notamment à une fréquence de résonance du transducteur, lesquelles vibrations sont appropriées pour provoquer des forces de Coriolis dépendant du débit massique dans le produit en écoulement ;

- l'arrangement de capteurs présentant, pour détecter les vibrations mécaniques de l'au moins un élément vibrant, notamment ses vibrations utiles, un premier capteur de vibrations (51) électrodynamique et au moins un deuxième capteur de vibrations (52) électrodynamique, notamment de construction identique au premier capteur de vibrations (51),

-- le premier capteur de vibrations (51) étant conçu pour convertir les mouvements vibratoires de l'au moins un élément vibrant au niveau d'un premier point de mesure, en un premier signal électrique de mesure de vibration de l'arrangement de capteurs, de telle sorte que ledit premier signal de mesure de vibration

-- présente au moins une première composante utile ($s1_{N1}$), à savoir une composante de tension alternative

--- d'une fréquence correspondant à la fréquence utile,

--- et d'une amplitude ($U1_N$) dépendant de la fréquence utile et d'un premier flux magnétique ($\Phi1$), à savoir un flux magnétique à travers le premier capteur de vibrations (51) ;

-- et le deuxième capteur de vibrations (52) étant conçu pour convertir les mouvements vibratoires de l'au moins un élément vibrant au niveau d'un deuxième point de mesure éloigné du premier point de mesure, en un deuxième signal électrique de mesure de vibrations de l'arrangement de capteurs, de telle sorte que ledit deuxième signal de mesure de vibration

-- présente au moins une deuxième composante utile ($s2_{N1}$), à savoir une composante de tension alternative

--- d'une fréquence correspondant à la fréquence utile,

--- et d'une amplitude dépendant de la fréquence utile et d'un deuxième flux magnétique ($\Phi2$), à savoir un flux magnétique à travers le deuxième capteur de vibrations (52) ;

- et l'arrangement de capteurs présentant, pour la détection d'un champ magnétique (H0 ; H0+H1) établi au moins en partie également en dehors du premier et du deuxième capteur de vibrations, au moins un premier détecteur de champ magnétique (61), formé notamment au moyen d'un capteur à effet Hall et/ou d'un interrupteur à lames souples, lequel détecteur est conçu pour convertir les modifications du champ magnétique (H0 ; H0+H1) au niveau d'un troisième point de mesure éloigné à la fois du premier point de mesure et du deuxième point de mesure, en un premier signal de champ magnétique ($\phi1$) de l'arrangement de capteurs, notamment un signal évaluant les modifications et/ou quantifiant les modifications et/ou un signal électrique, lequel signal présente une amplitude (U3) dépendant d'un troisième flux magnétique ($\Phi3$), notamment un flux magnétique à travers le premier détecteur de champ magnétique et/ou dépendant d'une densité de surface (B3) dudit flux magnétique ($\Phi3$), de telle sorte que le premier signal de champ magnétique suit au moins une modification du troisième flux magnétique ($\Phi3$) et/ou de sa densité de surface (B3) avec une modification de l'amplitude (U3) ;

- et le circuit de transmetteur étant conçu pour recevoir et évaluer aussi bien les premiers et les deuxièmes signaux de mesure de vibration que le premier signal de champ magnétique ($\phi1$), à savoir

-- pour déterminer, à l'aide des premiers et des deuxièmes signaux de mesure de vibration, des valeurs mesurées, notamment numériques, représentant le débit massique

-- ainsi que pour déterminer, à l'aide du premier signal de champ magnétique, au moins qualitativement, si un champ magnétique externe (H1), notamment un champ électrique généré à l'extérieur du débitmètre massique Coriolis et/ou un champ magnétique généré par un aimant positionné à l'extérieur du débitmètre massique Coriolis, est établi à l'intérieur du transducteur, notamment pour déterminer s'il existe un dérangement du transducteur par le même champ magnétique externe (H1), dérangement qui réduit notamment la capacité de fonctionnement de l'arrangement de capteurs et/ou provoque un dysfonctionnement de l'arrangement de capteurs et/ou réduit l'intégrité d'au moins l'un parmi le premier et le deuxième signal de mesure de vibration ou des valeurs mesurées de débit massique.

2. Débitmètre massique Coriolis selon la revendication 1, pour lequel le premier signal de champ magnétique ($\phi1$) est un signal analogique, notamment à valeur et à temps continus, notamment avec une tension dépendant du troisième flux magnétique et/ou de sa densité de surface (B3).

3. Débitmètre massique Coriolis selon la revendication précédente, pour lequel le circuit de transmetteur est conçu pour calculer, à l'aide du premier signal de champ magnétique, des valeurs caractéristiques pour au moins un indice de champ magnétique (MK1) caractérisant notamment une influence de l'arrangement de capteurs par le champ magnétique externe et/ou une influence d'au moins l'un parmi le premier et le deuxième flux magnétique, notamment de telle sorte que le même indice de champ magnétique dépende d'un écart du premier flux magnétique par rapport au deuxième flux magnétique et/ou évalue et/ou quantifie le même écart ou que le même indice de champ magnétique dépende d'un écart du premier flux magnétique par rapport à une valeur de référence déterminée au préalable et/ou évalue et/ou quantifie le même écart.

4. Débitmètre massique Coriolis selon la revendication précédente, pour lequel le circuit de transmetteur est conçu pour comparer une ou plusieurs valeurs caractéristiques pour l'indice de champ magnétique respectivement avec une ou plusieurs valeurs caractéristiques pour l'indice de champ magnétique, notamment déterminées par le fabricant du débitmètre massique Coriolis et/ou lors de la fabrication du débitmètre massique Coriolis, notamment avec une ou plusieurs valeurs de référence représentant une capacité de fonctionnement réduite de l'arrangement de capteurs et/ou une ou plusieurs valeurs de référence représentant un dysfonctionnement de l'arrangement de capteurs et/ou une ou plusieurs valeurs de référence représentant un débitmètre massique Coriolis qui n'est plus intact.

5. Débitmètre massique Coriolis selon la revendication précédente, pour lequel le circuit de transmetteur est conçu pour déterminer si une ou plusieurs valeurs caractéristiques pour l'indice de champ magnétique (MK1) sont supérieures à ladite au moins une valeur de référence pour l'indice de champ magnétique, notamment si une ou plusieurs valeurs pour l'indice de champ magnétique est supérieure à une ou plusieurs valeurs de référence représentant un fonctionnement réduit de l'arrangement de capteurs et/ou supérieure à une ou plusieurs valeurs de référence représentant un dysfonctionnement de l'arrangement de capteurs et/ou supérieure à une ou plusieurs valeurs de référence représentant un débitmètre massique Coriolis qui n'est plus intact, et pour émettre un message le signalant.

6. Débitmètre massique Coriolis selon l'une des revendications précédentes, pour lequel le circuit de transmetteur comporte une mémoire de données électronique non volatile (EEPROM), laquelle est conçue pour conserver des données numériques, notamment même en l'absence d'une tension de fonctionnement appliquée, à savoir pour mémoriser une ou plusieurs valeurs de référence déterminées au préalable pour l'indice de champ magnétique.

7. Débitmètre massique Coriolis selon la revendication 3 et 6, pour lequel une ou plusieurs valeurs de référence pour l'indice de champ magnétique - notamment une ou plusieurs valeurs de référence représentant une capacité de fonctionnement réduite de l'arrangement de capteurs et/ou notamment une ou plusieurs valeurs de référence représentant un dysfonctionnement de l'arrangement de capteurs, déterminées au préalable, notamment par le fabricant du débitmètre massique Coriolis et/ou lors de la fabrication du débitmètre massique Coriolis et/ou lors du fonctionnement du débitmètre massique Coriolis - sont stockées dans la mémoire électronique de données.

8. Débitmètre massique Coriolis selon la revendication précédente, pour lequel le circuit de transmetteur est conçu pour comparer une ou plusieurs valeurs caractéristiques pour l'indice de champ magnétique respectivement avec une ou plusieurs valeurs de référence pour l'indice de champ magnétique stockées dans la mémoire de données.

9. Débitmètre massique Coriolis selon l'une des revendications précédentes, pour lequel le premier détecteur de champ magnétique est monté sur le premier capteur de vibrations (51) ou positionné à proximité de celui-ci, notamment à moins de 5 cm, notamment fixé sur l'au moins un élément vibrant.

10. Débitmètre massique Coriolis selon l'une des revendications précédentes, lequel débitmètre comprend en outre : un boîtier de capteur (100), l'au moins un élément vibrant (10), le dispositif d'excitation ainsi qu'au moins partiellement l'arrangement de capteurs étant logés à l'intérieur du boîtier de capteur (100), notamment de telle sorte que l'au moins un élément vibrant (10) est fixé au boîtier de capteur (100) et/ou que le premier détecteur de champ magnétique est logé à l'intérieur du boîtier de capteur (100) et y est fixé.

11. Débitmètre massique Coriolis selon l'une des revendications précédentes, lequel débitmètre comprend en outre : un boîtier électronique (200), le circuit de transmetteur, notamment à la fois le circuit de transmetteur et le premier détecteur de champ magnétique, étant logé(s) à l'intérieur du boîtier électronique (200).

12. Débitmètre massique Coriolis selon l'une des revendications précédentes,

- pour lequel le premier capteur de vibrations est formé au moyen d'une première bobine mobile et le deuxième capteur de vibrations est formé au moyen d'une deuxième bobine mobile ; et/ou
- le premier détecteur de champ magnétique étant formé au moyen d'au moins une bobine sans fer fixée sur au moins un élément vibrant ; et/ou
- le premier détecteur de champ magnétique étant formé au moyen d'au moins un capteur à effet Hall ; et/ou
- le premier détecteur de champ magnétique étant formé au moyen d'au moins un interrupteur à lames souples.

**13.** Débitmètre massique Coriolis selon l'une des revendications précédentes,

- pour lequel le premier capteur de vibrations présente un premier aimant permanent relié mécaniquement à l'au moins un élément vibrant, notamment en formant le premier point de mesure, ainsi qu'une première bobine sans fer,

-- le premier aimant permanent formant un premier entrefer guidant le premier flux magnétique (B1) et la première bobine sans fer étant positionnée au moins partiellement à l'intérieur du même premier entrefer,
-- et le premier aimant permanent et la première bobine sans fer étant conçus pour être déplacés l'un par rapport à l'autre par des mouvements vibratoires de l'au moins un élément vibrant et pour générer une première tension d'induction servant de premier signal de mesure de vibration ; et

- pour lequel le deuxième capteur de vibrations présente un deuxième aimant permanent relié mécaniquement à l'au moins un élément vibrant, notamment en formant le deuxième point de mesure, ainsi qu'une deuxième bobine sans fer,

-- le deuxième aimant permanent formant un deuxième entrefer guidant le deuxième flux magnétique (B2) et la deuxième bobine sans fer étant positionnée au moins partiellement à l'intérieur du deuxième entrefer,
-- et le deuxième aimant permanent et la deuxième bobine sans fer étant conçus pour être déplacés l'un par rapport à l'autre par des mouvements vibratoires de l'au moins un élément vibrant et pour générer une deuxième tension d'induction servant de deuxième signal de mesure de vibration.

**14.** Débitmètre massique Coriolis selon l'une des revendications précédentes,

- pour lequel l'arrangement de capteurs comprend, pour la détection du champ magnétique (H), au moins un deuxième détecteur de champ magnétique (62), notamment de construction identique au premier détecteur de champ magnétique et/ou monté sur le deuxième capteur de vibrations (52) ou à proximité de celui-ci, lequel arrangement est conçu pour convertir des modifications du champ magnétique au niveau d'un quatrième point de mesure éloigné du troisième point de mesure, notamment également éloigné du premier point de mesure et/ou du deuxième point de mesure, en un deuxième signal de champ magnétique ($\phi$2) de l'arrangement de capteurs, notamment un signal évaluant les modifications et/ou un signal quantifiant les modifications et/ou un signal électrique, lequel signal présente une amplitude (U4), laquelle dépend d'un quatrième flux magnétique ($\Phi$4), à savoir d'un flux magnétique à travers le deuxième détecteur de champ magnétique et/ou d'une densité de surface (B4) dudit flux magnétique ($\Phi$4), de telle sorte que le deuxième signal de champ magnétique ($\phi$2) suit au moins une modification du quatrième flux magnétique ($\Phi$4) et/ou de sa densité de surface (B4) avec une modification de l'amplitude (U4) ;
- et pour lequel le circuit de transmetteur est conçu pour recevoir et évaluer également le deuxième signal de champ magnétique ($\phi$2), à savoir pour déterminer à l'aide également du deuxième signal de champ magnétique si le champ magnétique externe (H1) est présent.

**15.** Débitmètre massique Coriolis selon l'une des revendications précédentes,

- pour lequel chacun parmi le premier et le deuxième composant utile présente respectivement un angle de phase dépendant du débit massique et le circuit de transmetteur étant conçu pour calculer les valeurs mesurées du débit massique à l'aide d'une différence de phase entre le premier et le deuxième composant utile, à savoir une différence entre l'angle de phase du premier composant utile et l'angle de phase du deuxième composant utile ; et/ou
- le dispositif d'excitation présentant un excitateur de vibrations (41), notamment électrodynamique et/ou unique, lequel dispositif est destiné à exciter en vibrations l'au moins un tube de mesure ; et/ou
- l'au moins un élément vibrant étant formé au moyen d'au moins un tube, notamment au moins partiellement droit et/ou au moins partiellement en forme d'arc de cercle, avec un canal intérieur enveloppé par une paroi de tube, notamment métallique, et un canal intérieur enveloppé par ladite paroi, et lequel dispositif est conçu pour être traversé par le produit et être laissé vibrer pendant ce temps.

Fig. 1

Fig. 2

Fig. 3

Fig. 4b

Fig. 4a

30

EP 3 899 448 B1

*Fig. 5a*

*Fig. 5b*

Fig. 6b

Fig. 6a

*Fig. 7b*

*Fig. 7a*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 564682 A
- EP 816807 A
- EP 644403 A
- US 20020033043 A
- US 20060096390 A
- US 20070062309 A
- US 20070119264 A
- US 20080011101 A
- US 20080047362 A
- US 20080190195 A
- US 20080250871 A
- US 20100005887 A
- US 20100011882 A
- US 20100257943 A
- US 20110161017 A
- US 20110178738 A
- US 20110219872 A
- US 20110265580 A
- US 20110271756 A
- US 20120123705 A
- US 20130042700 A
- US 20160071639 A
- US 20160313162 A
- US 20160187176 A
- US 20170003156 A
- US 20170261474 A
- US 4491009 A
- US 4756198 A
- US 4777833 A
- US 4801897 A
- US 4876898 A
- US 4996871 A
- US 5009109 A
- US 5287754 A
- US 5291792 A
- US 5349872 A
- US 5705754 A
- US 5796010 A
- US 5796011 A
- US 5804742 A
- US 5831178 A
- US 5945609 A
- US 5965824 A
- US 6006609 A
- US 6092429 A
- US 6223605 B
- US 6311136 B
- US 6477901 B
- US 6505518 B
- US 6513393 B
- US 6651513 B
- US 6666098 B
- US 6711958 B
- US 6840109 B
- US 6883387 B
- US 6920798 B
- US 7017424 B
- US 7040181 B
- US 7077014 B
- US 7143655 B
- US 7200503 B
- US 7216549 B
- US 7296484 B
- US 7325462 B
- US 7360451 B
- US 7665369 B
- US 7792646 B
- US 7954388 B
- US 8201460 B
- US 8333120 B
- US 8695436 B
- WO 0019175 A
- WO 0034748 A
- WO 0102812 A
- WO 0102816 A
- WO 0171291 A
- WO 02060805 A
- WO 2005050145 A
- WO 2005093381 A
- WO 2007043996 A
- WO 2008013545 A
- WO 2008059262 A
- WO 2009148451 A
- WO 2010099276 A
- WO 2013092104 A
- WO 2014151829 A
- WO 2016058745 A
- WO 2017069749 A
- WO 2017123214 A
- WO 2017137347 A
- WO 2017143579 A
- WO 2018160382 A
- WO 2018174841 A
- WO 8505677 A
- WO 8802853 A
- WO 8803642 A
- WO 8900679 A
- WO 9421999 A

- WO 9503528 A
- WO 9516897 A
- WO 9529385 A
- WO 9529386 A
- WO 9802725 A
- WO 9940394 A
- WO 2018028932 A
- WO 2018007176 A
- WO 2018007185 A
- DE 102018102831
- US 5531126 A
- EP 2017067826 W